(19)

**Europäisches Patentamt**
**European Patent Office**
**Office européen des brevets**

(11) **EP 4 287 618 A1**

(12) **EUROPEAN PATENT APPLICATION**
published in accordance with Art. 153(4) EPC

(43) Date of publication:
**06.12.2023 Bulletin 2023/49**

(21) Application number: **22745947.6**

(22) Date of filing: **26.01.2022**

(51) International Patent Classification (IPC):
**H04N 13/366** (2018.01)   **G02B 27/01** (2006.01)
**G02B 30/29** (2020.01)   **G02B 30/30** (2020.01)
**H04N 13/125** (2018.01)   **H04N 13/31** (2018.01)
**H04N 13/317** (2018.01)

(52) Cooperative Patent Classification (CPC):
**G02B 27/01; G02B 30/29; G02B 30/30;**
**H04N 13/125; H04N 13/31; H04N 13/317;**
**H04N 13/366**

(86) International application number:
**PCT/JP2022/002965**

(87) International publication number:
**WO 2022/163728 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.01.2021   JP 2021010442**

(71) Applicant: **Kyocera Corporation**
**Kyoto-shi Kyoto 612-8501 (JP)**

(72) Inventors:
• **HAYASHISHITA, Ayuki**
  **Kyoto-shi, Kyoto 612-8501 (JP)**
• **KUSAFUKA, Kaoru**
  **Kyoto-shi, Kyoto 612-8501 (JP)**

(74) Representative: **TBK**
**Bavariaring 4-6**
**80336 München (DE)**

(54) **THREE-DIMENSIONAL DISPLAY DEVICE**

(57)   A three-dimensional display device includes a display panel, an optical element, a detector, and a controller that controls the display panel to display a composite of a first image and a second image based on a detected position of one eye of a first eye or a second eye. The controller performs a first shift process of shifting an active area outward to increase a shift amount by one subpixel, a second shift process of shifting a boundary in the first shift process by one subpixel in response to one eye of the first eye or the second eye moving by one subpixel, and a third shift process of shifting subpixels in a second cycle by one subpixel and shifting the boundary by a number of subpixels in the first cycle.

FIG. 35

EP 4 287 618 A1

**Description**

TECHNICAL FIELD

The present disclosure relates to a three-dimensional (3D) display device.

BACKGROUND OF INVENTION

A known technique is described in, for example, Patent Literature 1.

CITATION LIST

PATENT LITERATURE

Patent Literature 1: U.S. Patent Application Publication No. 2015/0363740

SUMMARY

In an aspect of the present disclosure, a three-dimensional display device includes a display panel, an optical element, a detector, and a controller. The display panel includes an active area including a plurality of subpixels arranged in a grid in a first direction and a second direction substantially orthogonal to the first direction. The active area displays a parallax image being a composite of a first image and a second image. The optical element includes a plurality of openings defining a traveling direction of light of the parallax image. The detector detects a position of a first eye and a position of a second eye of a user. The controller controls the display panel to display the composite of the first image and the second image based on the position of one eye of the first eye or the second eye detected by the detector with respect to a reference parallax image. The controller performs a first shift process of shifting the active area outward with respect to the position of the one eye detected by the detector to increase a shift amount by one subpixel in every first cycle set in the controller, a second shift process of shifting a boundary in the first shift process by one subpixel in response to one eye of the first eye or the second eye detected by the detector moving by one subpixel, and a third shift process of shifting subpixels in a second cycle by one subpixel and shifting the boundary by a number of subpixels in the first cycle. The subpixels in the second cycle are determined, with the first eye and the second eye of the user, as a product of the number of subpixels in the first cycle multiplied by a light collection efficiency.

BRIEF DESCRIPTION OF THE DRAWINGS

The objects, features, and advantages of the present disclosure will become more apparent from the following detailed description and the drawings.

FIG. 1 is a schematic diagram that forms the basis of a 3D display device according to an embodiment of the present disclosure.
FIG. 2 is a diagram of a display panel as its display surface is viewed from the eyes of a user.
FIG. 3 is a diagram of a parallax barrier, illustrating its example structure.
FIG. 4 is a diagram describing a changed display of subpixels in response to a change in relative positions between the display panel and the eyes of the user.
FIG. 5 is a diagram describing a changed display of subpixels in response to a change in relative positions between the display panel and the eyes of the user.
FIG. 6 is a diagram of a display panel in a second example as its display surface is viewed from the eyes of the user.
FIG. 7 is a diagram describing a changed display of subpixels after the eyes of the user move with respect to the display panel illustrated in FIG. 6.
FIG. 8 is a diagram of a display panel in a third example as its display surface is viewed from the eyes of the user.
FIG. 9 is a schematic diagram describing the relationship between an interocular distance, an optimum viewing distance, a gap, a barrier pitch, and an image pitch.
FIG. 10 is another schematic diagram of the 3D display device according to the embodiment.
FIG. 11 is a diagram of a display panel in a fourth example as its display surface is viewed from the eyes of the user.
FIG. 12 is a diagram describing minimum repeats of subpixels in the arrangement illustrated in FIG. 11.
FIG. 13 is a diagram describing picture elements in the display panel in FIG. 11 and display boundaries.
FIG. 14 is a diagram describing a changed display of subpixels after the eyes of the user move to different positions with respect to the display panel illustrated in FIG. 11.

FIG. 15 is a diagram describing the arrangement of subpixels on a display surface in a comparative example.

FIG. 16 is a diagram of a display panel in a fifth example as its display surface is viewed from the eyes of the user.

FIG. 17 is a diagram of a display panel in a sixth example as its display surface is viewed from the eyes of the user.

FIG. 18 is a schematic diagram of a 3D display device with an optical element being a lenticular lens.

FIG. 19 is a schematic diagram of a head-up display (HUD) system.

FIG. 20 is a diagram of an example vehicle incorporating the HUD system illustrated in FIG. 19.

FIG. 21 is a flowchart of a method for designing a 3D display device.

FIG. 22 is a diagram illustrating the range of the field of view with a first light collection efficiency.

FIG. 23 is a diagram illustrating the range of the field of view with a second light collection efficiency.

FIG. 24 is a diagram illustrating the range of the field of view with the second light collection efficiency.

FIG. 25 is a diagram illustrating the range of the field of view with a third light collection efficiency.

FIG. 26 is a diagram illustrating the range of the field of view with the third light collection efficiency.

FIG. 27 is a diagram illustrating the range of the field of view with the second light collection efficiency.

FIG. 28 is a diagram illustrating the range of the field of view with the first light collection efficiency.

FIG. 29 is a diagram of a viewed screen with the head of the user being stationary with the first light collection efficiency.

FIG. 30 is a diagram of a viewed screen after the user moves the head by one subpixel to the right with light being collected completely (a light collection efficiency of 200%).

FIG. 31 is a diagram of a viewed screen with the first light collection efficiency after the user moves the head by 15.75 mm (63 mm/4) to the right.

FIG. 32 is a diagram of a viewed screen with the head of the user being stationary with the second light collection efficiency.

FIG. 33 is a diagram of a viewed screen with the head of the user being stationary with the second light collection efficiency.

FIG. 34 is a diagram of a viewed screen with the second light collection efficiency after the user moves the head by one subpixel to the right.

FIG. 35 is a diagram of a viewed screen with the second light collection efficiency after the user moves the head by one subpixel to the right.

FIG. 36 is a diagram of a viewed screen with the second light collection efficiency after the user moves the head by 15.75 mm (63 mm/4) to the right.

FIG. 37 is a diagram of a viewed screen with the head of the user being stationary with the third light collection efficiency.

FIG. 38 is a diagram describing the shifting of subpixels for a light collection efficiency of 0% to allow the triangles each indicating the range of the field of view of an image for adjacent eyes to have the same base over time.

FIG. 39 is a diagram of a viewed screen with the third light collection efficiency when the head moves by 15.75 mm (63 mm/4) before collective shifting.

FIG. 40 is a diagram of a viewed screen with the third light collection efficiency when the head moves by 15.75 mm (63 mm/4) after collective shifting.

FIG. 41 is a schematic diagram of luminance measurement equipment for examining crosstalk reduction in the 3D display device.

## DESCRIPTION OF EMBODIMENTS

As a three-dimensional (3D) display device with the structure that forms the basis of a 3D display device according to one or more embodiments of the present disclosure, a known 3D display device for glasses-free 3D image viewing includes an optical element that directs a part of image light from a display panel to reach a right eye and another part of the image light to reach a left eye. The display panel includes subpixels arranged in a rectangle in a horizontal direction parallel to a line connecting the left and right eyes and in a vertical direction orthogonal to the horizontal direction. A parallax barrier is used to control image light reaching the left and right eyes. The parallax barrier has multiple strip-shaped openings extending in the vertical direction. With the vertically extending parallax barrier arranged in the horizontal direction, an image may be susceptible to moire and be less viewable. Patent Literature 1 describes a 3D display device with an optical element including a parallax barrier extending in the diagonal direction of subpixels.

A two-dimensional (2D) display device has an optimum viewing distance (OVD) that is an appropriate distance for viewing a 3D image. The OVD can be set appropriately to reduce crosstalk based on a use environment such as movement of the head of a user of the 3D display device.

In response to the above circumstances, one or more aspects of the present disclosure are directed to a 3D display device with higher flexibility in setting the OVD. Basic Structure

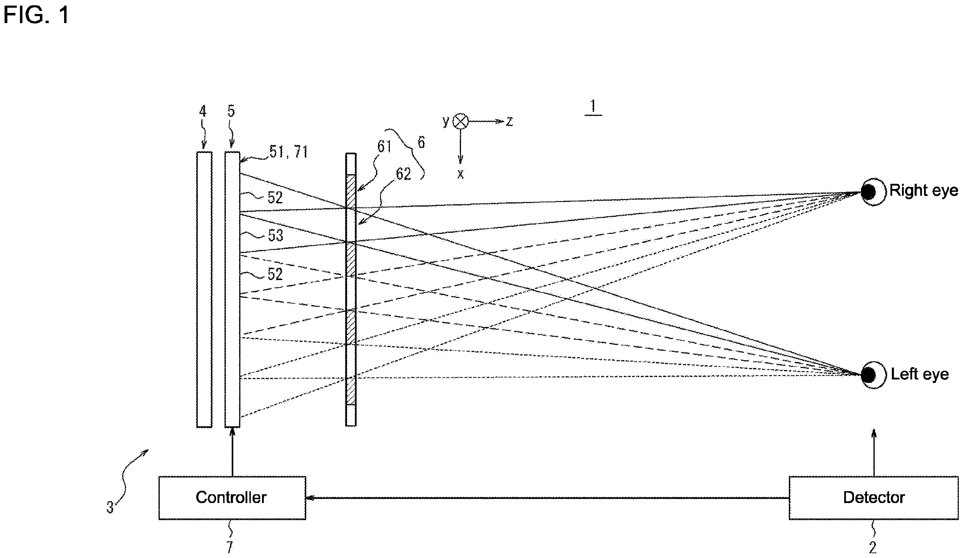

The structure that forms the basis of a 3D display device according to one or more embodiments of the present disclosure will be described first with reference to FIGs. 1 to 17. The 3D display device 1 according to the present embodiment includes a detector 2, an illuminator 4, a display panel 5, and a parallax barrier 6 being an optical element as illustrated in FIG. 1. FIG. 1 is a schematic diagram of the 3D display device 1 as viewed from above a user viewing an image displayed on the display panel 5.

Detector

The detector 2 detects the positions of the eyes of the user and outputs the detected position information to a controller 7 (described later) in the 3D display device 1. The detector 2 may include, for example, a camera. The detector 2 may capture an image of the user's face with the camera. The detector 2 may detect, using an image captured with the camera, the position of at least one of the left eye or the right eye as coordinates in a 3D space. The detector 2 may detect, using images captured with two or more cameras, the position of at least one of the left eye or the right eye as coordinates in a 3D space.

The detector 2 may detect, based on the detection result of the position of at least one of the left eye or the right eye, the moving distances of the left eye and the right eye in the direction in which the eyes are aligned.

The 3D display device 1 may not include the detector 2. When the 3D display device 1 does not include the detector 2, the controller 7 may include an input terminal for receiving signals from an external detector. The external camera may be connected to the input terminal directly. The external camera may be connected to the input terminal indirectly through a shared information communication network. The detector 2 including no camera may include an input terminal for receiving image signals from the camera. The detector 2 including no camera may detect the position of at least one of the left eye or the right eye using an image signal input into the input terminal.

The detector 2 may include, for example, a sensor. The sensor may be an ultrasonic sensor or an optical sensor. The detector 2 may detect the position of the user's head with the sensor, and detect the position of at least one of the left eye or the right eye based on the position of the head. The detector 2 may detect, with one or more sensors, the position of at least one of the left eye or the right eye as coordinates in a 3D space.

The detector 2 may detect, based on the detection result of the position of at least one of the left eye or the right eye, the moving distances of the left eye and the right eye in the direction in which the eyes are aligned.

The 3D display device 1 may not include the detector 2. For the 3D display device 1 without the detector 2, the controller 7 may include an input terminal for receiving signals from an external detector. The external detector may be connected to the input terminal. The external detector may be connected to the input terminal indirectly through a shared information communication network for the input terminal. The controller 7 may receive position coordinates indicating the position of at least one of the left eye or the right eye input from the external detector. The controller 7 may calculate, based on the position coordinates, the moving distances of the left eye and the right eye in the horizontal direction. When receiving the position of one eye from the detector 2, the controller 7 may estimate the position of the other eye from the user's interocular distance information or typical interocular distance information.

With the relative positional relationship between the display panel 5 in the 3D display device 1 and the eyes of the user being limited to a predetermined range, an image may be displayed on the display panel 5 based on the positions of the eyes.

In an example embodiment of the present disclosure, the 3D display device 1 includes the illuminator 4, the display panel 5 as a display device, and the parallax barrier 6 as an optical element. The 3D display device 1 may further include the controller 7. The controller 7 may not be included in the 3D display device 1 and may be located external to the 3D display device 1.

The illuminator 4 is located near one surface of the display panel 5 and illuminates the display panel 5 with planar illumination light. The illuminator 4 is located opposite to the user as viewed from the display panel 5. The illuminator 4 may include, for example, a light source, a light guide plate, a diffuser plate, and a diffusion sheet. The illuminator 4 may spread the illumination light uniformly in a plane direction of the light incident surface of the display panel 5 using, for example, the light source, the light guide plate, and the diffuser sheet. The illuminator 4 emits uniform light toward the display panel 5.

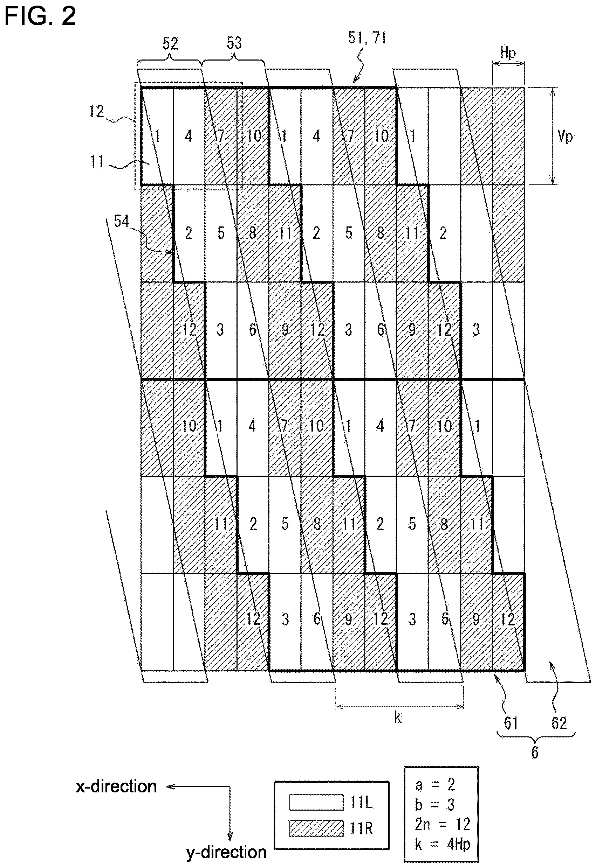

The display panel 5 may be, for example, a transmissive liquid crystal display panel. The display panel 5 displays various images on an active area 51 illustrated in FIG. 2. In one or more embodiments of the present disclosure, the active area 51 in the display panel 5 in a space visually perceived by the user may be a display surface 71. When the user visually perceives the active area 51 in the display panel 5 directly without any one of, for example, a lens, a concave mirror, or a convex mirror located between the user and the active area 51 in the display panel 5, the display surface 71 is perceived as a virtual image of the active area 51 in the display panel 5. The display surface 71 is thus located at the same position as the virtual image of the active area 51 in the display panel 5. As illustrated in FIG. 2, the display panel 5 includes the active area 51 including divisional areas defined in a first direction (x-direction) and in a second direction (y-direction) substantially orthogonal to the first direction. In FIG. 2, the display surface 71 is the active area 51. The first direction (x-direction) corresponds to a direction for generating parallax between the two eyes of the user. For the 3D display device 1 including the display panel 5 to be viewed directly by the user in a typical seated or upright posture, the first direction x is a lateral direction as viewed from the user, and the second direction y is a vertical direction as viewed from the user. The first direction is referred to as x-direction. The second direction is referred to as y-direction. In the figures illustrating the display panel 5, a direction orthogonal to x- and y-directions and extending toward the eyes of the user is referred to as z-direction.

Each divisional area corresponds to a subpixel 11. Multiple subpixels 11 are each longer in y-direction than in x-direction. Each subpixel 11 has any one of the colors red (R), green (G), or blue (B). A single pixel 12 may include a set of three subpixels 11, or R, G, and B subpixels 11. A single pixel 12 may be referred to as a picture element. For example, multiple subpixels 11 included in a single pixel 12 are arranged in x-direction. A set of subpixels 11 arranged in x-direction is referred to as a row. For example, subpixels 11 having the same color are arranged in y-direction. A set of subpixels 11 arranged in y-direction is referred to as a column. As described later, each subpixel 11 may be longer in x-direction than in y-direction in other embodiments of the present disclosure.

The display panel 5 is not limited to a transmissive display panel and may be another display panel such as a self-luminous display panel. The transmissive display panel includes a liquid crystal panel. The self-luminous display panel 5 may be an organic electroluminescent (EL) display panel 5 or an organic EL display panel 5. When the display panel 5 is a self-luminous display panel, the illuminator 4 is eliminated.

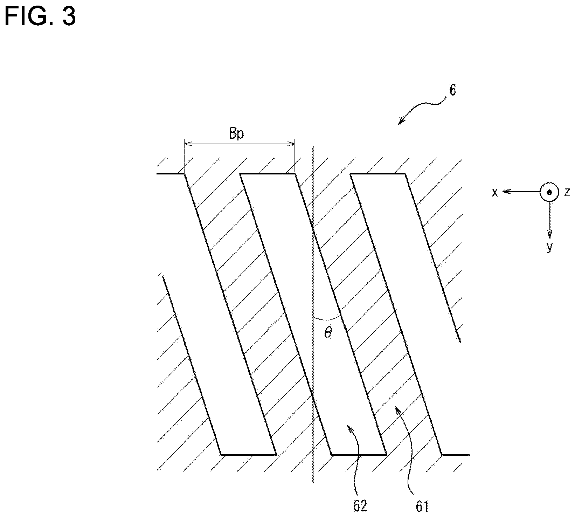

The parallax barrier 6 defines the traveling direction of image light emitted from the subpixels 11. As illustrated in, for example, FIG. 3, the parallax barrier 6 includes multiple light-blocking portions 61 and multiple transmissive portions 62. The multiple light-blocking portions 61 and the multiple transmissive portions 62 may be arranged alternately in the first direction. The multiple light-blocking portions 61 each have substantially the same width and occur periodically in x-direction. Image light emitted from the subpixels 11 is viewable with the left eye and the right eye within a range defined by the parallax barrier 6. The parallax barrier 6 may be located opposite to the illuminator 4 from the display panel 5 as illustrated in FIG. 1. As described later, the parallax barrier 6 may be located between the display panel 5 and the illuminator 4 in other embodiments.

In the present embodiment, the parallax barrier 6 being an optical element may be, for example, a low light-transmissive resin film attached to the main surface of the display panel 5 for emitting light. The resin film may be made of a material such as polyester (uniaxially drawn polyester), polyarylate, polyethersulfone (PES), polycarbonate (PC), polyimide, polyetherimide, or polysulfone. The resin film functions as a black matrix.

The transmissive portions 62 are parts of the parallax barrier 6 that transmit light incident on the parallax barrier 6. The transmissive portions 62 may transmit light with a transmittance of a first predetermined value or greater. The first predetermined value may be, for example, substantially 100% or a value less than 100%. The first predetermined value can be a value less than or equal to 100%, such as 80% or 50%, when the image light emitted from the active area 51 falls within the range of sufficient visibility. The light-blocking portions 61 prevent an image displayed in the active area 51 in the display panel 5 from being viewable with the eyes of the user. The light-blocking portions 61 may block light with a transmittance of a second predetermined value or less. The second predetermined value may be, for example, substantially 0% or a value greater than 0% and close to 0%. The first predetermined value may be several times, or for example, 5 times or 10 times, greater than the second predetermined value.

The parallax barrier 6 may include a liquid crystal shutter. The liquid crystal shutter can control the light transmittance based on a voltage applied between transparent electrodes with a liquid crystal layer in between. The liquid crystal shutter may include multiple pixels and control the light transmittance for each pixel. The liquid crystal shutter can form a portion with a high light transmittance or a portion with a low light transmittance in an intended shape. For the parallax barrier 6 being a liquid crystal shutter, the transmissive portions 62 may have a transmittance of the first predetermined value or greater. For the parallax barrier 6 being a liquid crystal shutter, the light-blocking portions 61 may have a transmittance of the second predetermined value or less. The parallax barrier 6 includes a shutter panel that allows a microscopic area to switch between a light-transmissive state and a light-blocking state. The shutter panel may be a micro-electro-mechanical system (MEMS) shutter panel with a MEMS shutter in addition to a liquid crystal shutter.

In FIG. 2, edges of the parallax barrier 6 as viewed from the eyes of the user are illustrated on the display surface 71. In other words, the light-blocking portions 61 and the transmissive portions 62 illustrated in FIG. 2 are images projected on the display surface 71 from an OVD point at which an eye of the user is located. In one or more embodiments of the present disclosure, a projected image refers to an image of an object that is defined by points of intersection between a plane in which the object is projected and lines connecting a reference point in the lateral direction (x-direction) and all the points on the object along optical paths. To project refers to forming a projected image of the object on a plane. The lines connecting the reference point and points on the object extend along paths that are, for example, refracted or deflected by the optical effects of the parallax barrier 6.

Image light passing through the transmissive portions 62 in the parallax barrier 6 illustrated in FIG. 2 reaches an eye of the user. Left-eye viewable areas 52 on the active area 51 may be viewable, with the left eye of the user, as strip areas corresponding to the transmissive portions 62. Any left-eye light-blocking areas 53 on the active area 51 that correspond to the light-blocking portions 61 in the parallax barrier 6 are almost unviewable with the left eye of the user.

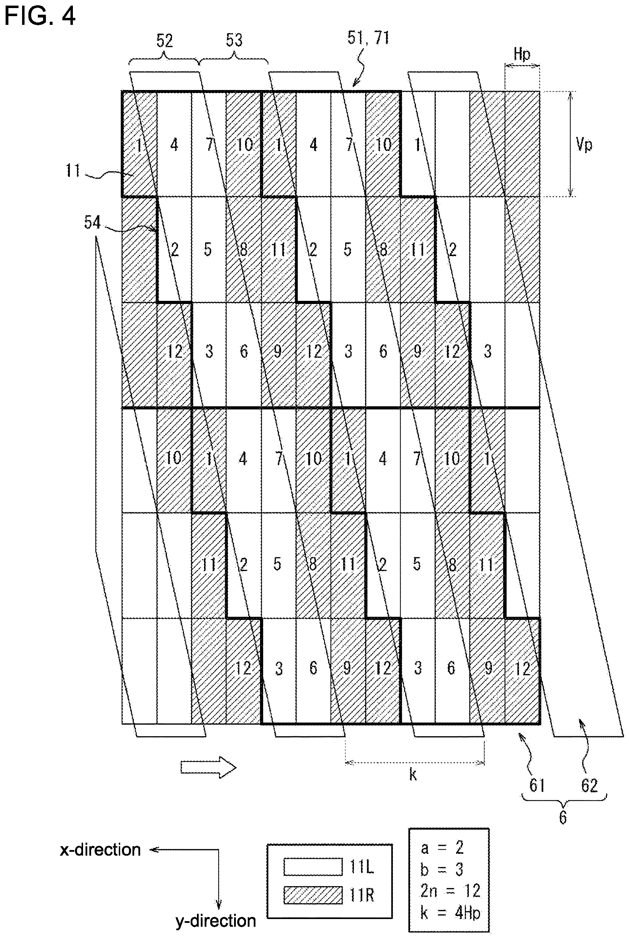

Each of the left-eye viewable areas 52 and the left-eye light-blocking areas 53 matches an area of the corresponding one of the transmissive portions 62 and the light-blocking portions 61 in the parallax barrier 6 projected on the active area 51 from the OVD point at which the left eye of the user is located. FIG. 2 illustrates the active area 51 behind the light-blocking portions 61 in the parallax barrier 6 for ease of explanation. FIGs. 4 to 8, 11, 12, and 14 also illustrate the active area 51 behind the light-blocking portions 61 in the parallax barrier 6 for ease of explanation.

As illustrated in FIG. 1, the 3D display device 1 may cause the user to view at least parts of left-eye transmissive portions 53 in the active area 51 with the right eye through the corresponding transmissive portions 61. With the light-blocking portions 61 in the parallax barrier 6 blocking image light, at least parts of the left-eye viewable areas 52 on the active area 51 are not viewable with the right eye of the user. At least a part of a right-eye image displayed on the left-eye light-blocking area 53 is transmitted in the direction of the optical path toward the right eye of the user. For the parallax barrier 6 being a shutter panel, the parallax barrier 6 may selectively change the positions of the transmissive portions 62 to transmit at least a part of a left-eye image in the direction of the optical path toward the left eye of the user. With the parallax barrier 6 being a shutter panel, the parallax barrier 6 may selectively change the positions of the transmissive portions 62 to transmit at least a part of a right-eye image in the direction of the optical path toward the right eye of the user.

In FIG. 1, the controller 7 is connected to the components of the 3D display device 1 to control these components. The controller 7 may be, for example, a processor. The controller 7 may include one or more processors. The processors may include a general-purpose processor that reads a specific program and performs a specific function, and a processor dedicated to specific processing. The processors may include an application-specific integrated circuit (ASIC). The processors may include a programmable logic device (PLD). The PLD may include a field-programmable gate array (FPGA). The controller 7 may be either a system on a chip (SoC) or a system in a package (SiP) in which one or more processors cooperate with other components. The controller 7 may include a storage to store various items of information or programs to operate each component of the 3D display device 1. The storage may be, for example, a semiconductor memory. The storage may serve as a work memory for the controller 7.

Arrangement of Subpixels for Displaying Left-eye image and Right-eye image

The controller 7 determines, of multiple subpixels 11, first subpixels 11L and second subpixels 11R based on the positions of the left and right eyes of the user, the structures of the display panel 5 and the parallax barrier 6, and the structures of the left-eye image and the parallax barrier 6. The controller 7 may determine, of multiple subpixels 11 included in a single minimum repeat, first subpixels 11L and second subpixels 11R. The arrangement includes multiple minimum repeats each including multiple subpixels 11. Such multiple minimum repeats occur periodically in x- and y-directions. The controller 7 may determine, for a subpixel group including multiple minimum repeats, first subpixels 11L and second subpixels 11R in the same arrangement pattern. The user can view the first subpixels 11L with the left eye through the parallax barrier 6, and can view the second subpixels 11R with the right eye through the parallax barrier 6. The first subpixels 11L and the second subpixels 11R in one embodiment may be arranged in the direction as illustrated in, for example, FIG. 2.

In the example illustrated in FIG. 2, the parallax barrier 6 includes the light-blocking portions 61 and the transmissive portions 62 having the same width in x-direction. In other words, the 3D display device 1 has a barrier opening ratio of 50%. This barrier opening ratio allows the left-eye light-blocking areas 53 to substantially match right-eye viewable areas. The 3D display device 1 may have a barrier opening ratio other than 50%. To reduce crosstalk, the light-blocking portions 61 may be wider than the transmissive portions 62 in x-direction. Crosstalk occurs when the user either views a part of a left-eye image with the right eye or views a part of a right-eye image with the left eye, or views both these parts with the respective eyes. The light-blocking portions 61 wider than the transmissive portions 62 in x-direction can reduce crosstalk. In this case, the barrier opening ratio is less than 50%.

In FIG. 2, the subpixels 11 are numbered 1 to 12 for ease of explanation. FIG. 2 is a diagram of the display panel 5 with the eyes of the user at reference positions with respect to the display panel 5. The subpixels 11 numbered 1 to 6 in FIG. 2 each have a half or more of its area included in the left-eye viewable area 52. These subpixels 11 are referred to as first subpixels 11L for displaying a left-eye image. The subpixels 11 numbered 7 to 12 in FIG. 2 each have a half or more of its area included in the left-eye light-blocking area 53 (right-eye viewable area). These subpixels 11 are referred to as second subpixels 11R for displaying a right-eye image. The figures below illustrate the first subpixels 11L without shade, and the second subpixels 11R with shade.

In FIG. 2, the barrier opening ratio is 50%, providing a reference as to whether a half of the area of each subpixel 11 is included in the left-eye viewable area 52. A different reference may be used. With a barrier opening ratio less than 50%, the left-eye viewable area 52 and the right-eye viewable area are spaced from each other and are narrower than half the active area 51. In this case as well, when a subpixel 11 includes a portion in the left-eye viewable area 52 larger than its portion in the right-eye viewable area 53, the subpixel 11 may be the first subpixel 11L. When a subpixel 11 includes a portion in the right-eye viewable area 53 larger than its portion in the left-eye viewable area 52, the subpixel 11 may be the second subpixel 11R.

A set of the twelve subpixels 11 numbered 1 to 12 is referred to as a minimum repeat 54. The minimum repeat 54 includes 2n subpixels 11 (n is a natural number). In the example of FIG. 2, n is 6. In FIG. 2, a subpixel group as the minimum repeat 54 is indicated by a thick line. In the example of FIG. 2, each subpixel group as the minimum repeat 54 includes multiple sets (rows) of subpixels 11 aligned in x-direction on the active area 51 and multiple sets (columns) of subpixels 11 aligned in y-direction. In FIG. 2, subpixel groups each as the minimum repeat 54 located in the same position in y-direction are arranged in x-direction repeatedly in the same pattern. In FIG. 2, subpixel groups each as the minimum repeat 54 adjacent to each other in x-direction extend in different columns. In FIG. 2, subpixel groups each as the minimum repeat 54 aligned in the positive y-direction are each displaced in the negative x-direction by two subpixels.

The number of subpixels 11 included in the minimum repeat 54, or 2n, is a pitch in x-direction (horizontal pitch Hp) for the subpixels 11 on the display surface 71, a pitch in y-direction (vertical pitch Vp) on the display surface 71, a barrier inclination angle θ on the display surface 71, and an inclination angle of the parallax barrier 6 on the display surface 71 projected from the positions of the eyes of the user onto the display surface 71. More specifically, the barrier inclination angle θ is an angle between y-direction and the direction in which projected areas of the transmissive portion 62 and the light-blocking portion 61 extend on the display surface 71. The image pitch k has the same width as an area including the left-eye viewable area 52 and its adjacent left-eye light-blocking area 53 in x-direction.

The barrier inclination angle θ is set to allow an edge line of the transmissive portion 62 in the parallax barrier 6 projected on the display surface 71 to cross a sections of the horizontal pitch Hp while crossing b sections of the vertical pitch Vp. The values a and b are natural numbers. In other words, the barrier inclination angle θ is written as Formula 1 below, where a and b are natural numbers.

$$\tan\theta = \frac{a \cdot Hp}{b \, Vp} \qquad \text{and } a \neq b \qquad\qquad (1)$$

In the example of FIG. 2, a is 2, and b is 3. This structure reduces, for example, moire and allows the barrier inclination angle θ to be set in a direction other than the diagonal direction of the subpixel 11 on the display surface 71. A combination of natural numbers that are relatively prime may be used as a and b.

The number of subpixels 11 in the minimum repeat 54, or 2n, and the image pitch k have the relationship written as Formula 2 below.

$$k = 2n \times \frac{Hp}{b} \qquad\qquad (2)$$

In the example of FIG. 2, k is 4 Hp.

The minimum repeat 54 is the smallest set of multiple subpixels 11 with the same arrangement pattern of the first subpixels 11L and the second subpixels 11R. The subpixels 11 in the minimum repeat 54 are arranged repeatedly on the display surface 71 to allow the controller 7 to restructure the entire image regularly. The arrangement of the first subpixels 11L and the second subpixels 11L may be controlled based on the minimum repeat 54.

The controller 7 in FIG. 1 determines each subpixel 11 included in a minimum repeat 54 as either a first subpixel 11L or a second subpixel 11R depending on the positions of the two eyes of the user detected by the detector 2. In the example of FIG. 2, the subpixels 11 numbered 1 to 6 are first subpixels 11L viewable with the left eye. The subpixels 11 numbered 7 to 12 are second subpixels 11R viewable with the right eye.

In FIG. 4, when the parallax barrier 6 as viewed from the eyes of the user at the OVD is at a position relatively displaced by about 1/3 the horizontal pitch Hp in the negative x-direction (the direction indicated by the arrow) from the position in FIG. 2, a first subpixel 11L and second subpixels 11 each have a half or more of its area included in the left-eye light-blocking area 53. The subpixel 11 is thus changed from a first subpixel 11L to a second subpixel 11R. In this manner, in all subpixel groups each as the minimum repeat 54, the subpixels 11 numbered 1 and 7 are changed between first subpixels 11L and second subpixels 11R. Thus, the display panel 5 can continue to display a 3D image for the user with the eyes at different positions.

In one or more embodiments of the present disclosure, a boundary between a group of first subpixels 11L and a group of second subpixels 11R is referred to as a display boundary. The display boundary separates the first subpixels 11L from a group of second subpixels 11R. The display boundary is located between multiple subpixels. For subpixels 11 adjacent to each other in x-direction in each minimum repeat 54 in FIG. 2, a display boundary is also located between subpixels numbered 4 and 7, 5 and 8, and 6 and 9. In FIG. 4, the display boundary between the subpixels 11 numbered 4 and 7 in the same minimum repeat 54 in FIG. 2 moves to between the subpixels 11 numbered 7 and 10. The display boundary between the subpixel 11 numbered 10 and its adjacent subpixel 11 and the subpixel 11 numbered 1 in the adjacent minimum repeat 54 in FIG. 2 is shifted to between the subpixel 11 numbered 1 and the subpixel 11 numbered 4 in FIG. 4. In this manner, the controller 7 shifts the display boundary on the active area 51 to control the display panel 5. Changing the boundary between the first subpixels 11L and the second subpixels 11R in each minimum repeat 54 is substantially the same as shifting the display boundary.

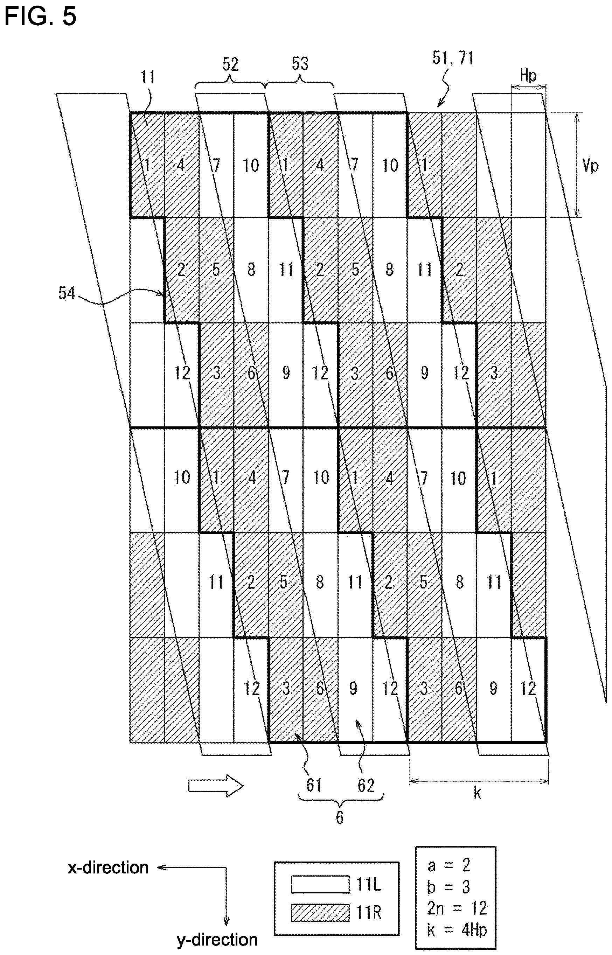

When the parallax barrier 6 changes its position with respect to the display surface 71 as viewed from the user, the controller 7 sequentially changes subpixels included in the minimum repeat 54 between first subpixels 11L and second subpixels 11R. FIG. 5 illustrates the arrangement of first subpixels 11L and second subpixels 11R when the parallax barrier 6 as viewed from the user further changes its relative position from the position in FIG. 4. The projected parallax barrier 6 on the display surface 71 is displaced by twice the horizontal pitch Hp in the negative x-direction compared with its position in FIG. 2. Twice the horizontal pitch Hp is half the length of an image pitch k. In the state illustrated in FIG. 2, all subpixel groups each including a minimum repeat 54 are changed between first subpixels 11L and second subpixels 11R. In other words, the subpixels 11 numbered 1 to 6 are second subpixels 11R for displaying a right-eye image, and the subpixels 11 numbered 7 to 12 are first subpixels 11L for displaying a left-eye image. This indicates that the display boundary has shifted in the negative x-direction on the entire display surface 71 by a distance that is twice the horizontal pitch Hp.

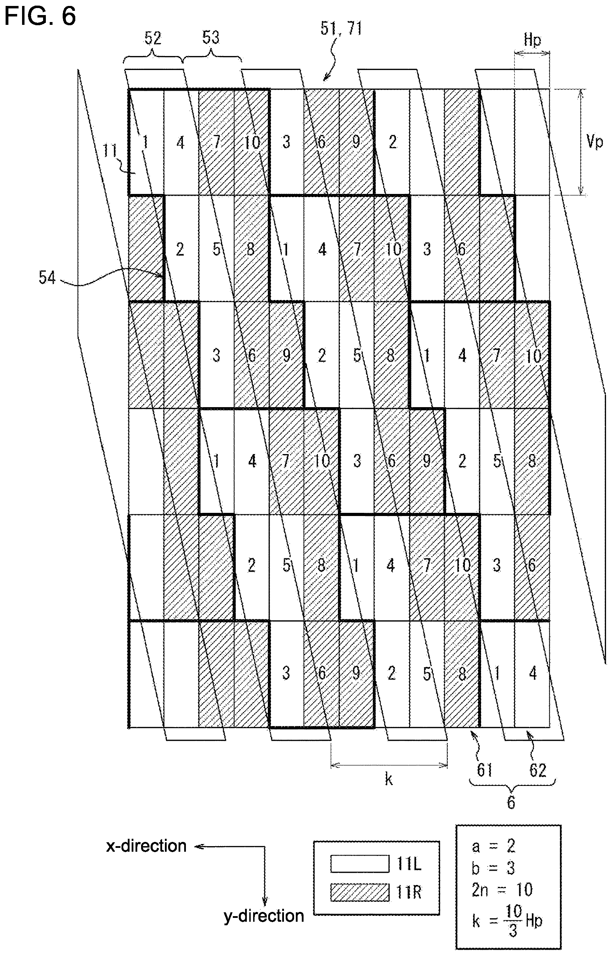

FIG. 6 is a diagram of a display panel 5 in a second example as a display surface 71 is viewed from the eyes of the user. In FIG. 6, light-blocking portions 61 and transmissive portions 62 in the parallax barrier 6 are arranged differently from the arrangement in the first example. The subpixels 11 for displaying a left-eye image and a right-eye image are arranged differently from the arrangement in the first example of FIG. 6. In the example of FIG. 6, the parallax barrier 6 projected on the display surface 71 as viewed from the OVD includes the light-blocking portion 61 and the transmissive portion 62 with edge lines equally inclined as in the example of FIG. 2. In other words, a is 2, and b is 3. The number of subpixels included in the minimum repeat 54, or 2n, is set to 10. The image pitch k is 10 Hp/3. In other words, the multiple transmissive portions 62 each have a pitch in x-direction that is not an integer multiple of the horizontal pitch Hp as the width of a subpixel 11 in x-direction.

Each subpixel group as a minimum repeat 54 is a group of subpixels 11 indicated by a thick line in FIG. 6. In FIG. 6, the subpixels 11 numbered 1 to 5 are first subpixels 11L viewable with the left eye. The subpixels 11 numbered 6 to 10 are second subpixels 11R viewable with the right eye. In FIG. 6 as well, a subpixel 11 with a half or more of its area included in the left-eye viewable area 52 is referred to as a first subpixel 11L, and a subpixel 11 with a half or more of its area included in the left-eye light-blocking area (right-eye viewable area) 53 is referred to as a second subpixel 11R.

Unlike in the example of FIG. 2, subpixel groups each as the minimum repeat 54 in the same position in y-direction are not arranged repeatedly in the same pattern in x-direction. Subpixel groups as multiple adjacent minimum repeats 54 are displaced from each other in x- and y-directions. In FIG. 6, the subpixel groups as the minimum repeats 54 adjacent in x-direction partially extend in the same row. In FIG. 6, the subpixel groups as the minimum repeats 54 adjacent in y-direction are partially aligned in the same column. The inventors have noticed that this arrangement allows the number of subpixels as a minimum repeat 54, or 2n, to be a natural number other than multiples of b. When the number 2n is selectable from numbers other than multiples of b, the image pitch k can be set with higher flexibility.

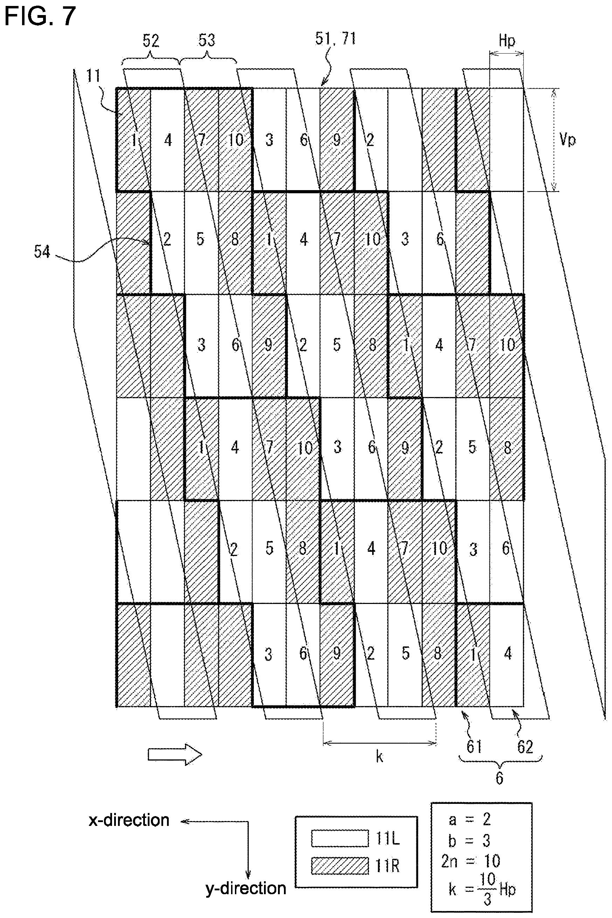

FIG. 7 illustrates the arrangement of the first subpixels 11L and the second subpixels 11R when the parallax barrier 6 as viewed from the eyes of the user at the OVD is at a position relatively displaced by about 2/5 horizontal pitch Hp in the negative x-direction (the direction indicated by the arrow) from the position in FIG. 6. The controller 7 changes the subpixel 11 numbered 1 having a half or more of its area included in the left-eye light-blocking area 53 from the first subpixel 11L to the second subpixel 11R. The controller 7 changes the subpixel 11 numbered 6 having a half or more of its area included in the left-eye viewable area 52 from the second subpixel 11R to the first subpixel 11L. In all subpixel groups each as the minimum repeat 54, the subpixels 11 numbered 1 and 6 are changed between first subpixels 11L and second subpixels 11R in this manner. When the parallax barrier 6 projected on the display surface 71 changes its relative position, subpixels in each subpixel group as the minimum repeat 54 are sequentially changed between first subpixels 11L and second subpixels 11R. When the number 2n is not an integer multiple of b, the controller 7 can cause a 3D image to be displayed by changing subpixels between first subpixels 11L and second subpixels 11R based on the positions of the eyes of the user.

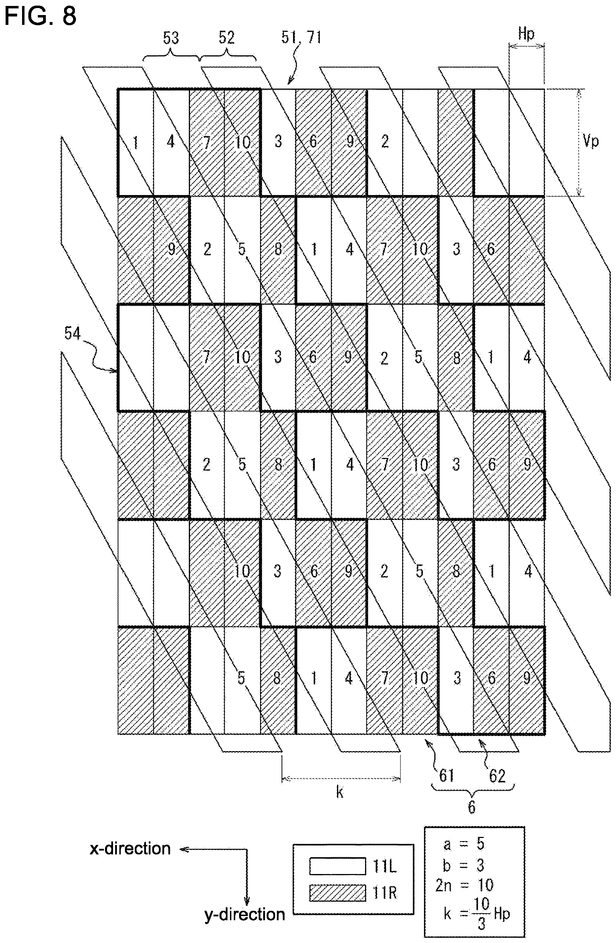

In the examples illustrated in FIGs. 2 and 6, the two natural numbers a and b have the relationship of a < b. The natural numbers a and b may have the relationship of a > b. FIG. 8 is a diagram of a display panel 5 in a third example as a display surface 71 is viewed from the eyes of the user. In the third example illustrated in FIG. 8, light-blocking portion 61 and transmissive portion 62 in a parallax barrier 6 projected on the display surface 71 as viewed from the OVD have edge lines crossing the length fivefold the horizontal pitch Hp while crossing the length threefold the vertical pitch Vp. In other words, a is 5, and b is 3. Each minimum repeat 54 includes 10 subpixels 11. The image pitch k is thus 10 Hp/3. As illustrated in FIG. 8, the 3D display device 1 can be operated with a > b.

Optimum Viewing Distance Design

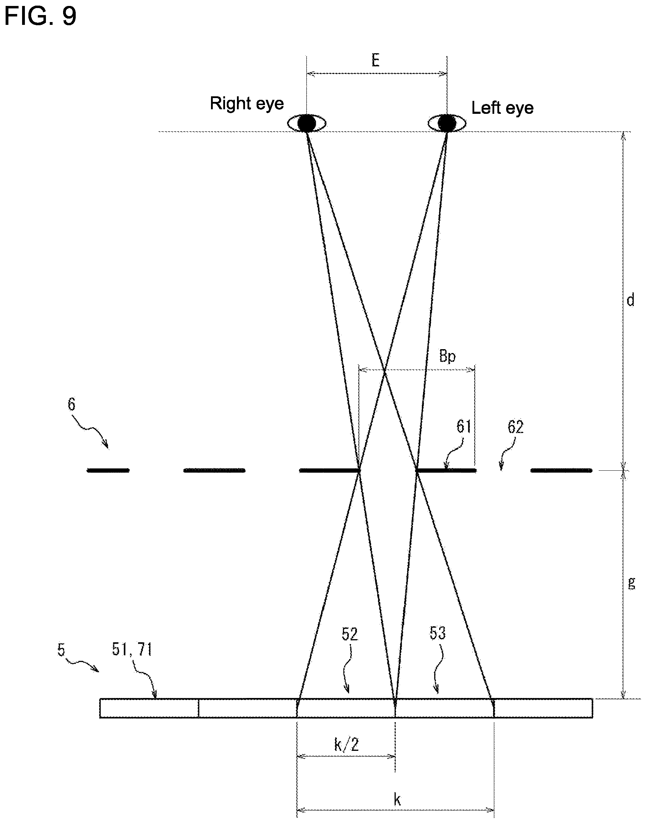

The OVD for the 3D display device 1 is described with reference to FIG. 9. FIG. 9 is a schematic diagram of the eyes of the user, the display panel 5, and the parallax barrier 6 as viewed in y-direction with reference numerals indicating dimensions. A barrier pitch Bp, a gap g, an OVD d, an interocular distance E of the user, and the image pitch k satisfy Formulas 3 and 4 below.

$$E : d = k / 2 : g \tag{3}$$

$$d : Bp = (d + g) : k \tag{4}$$

The barrier pitch Bp herein is the total pitch of the light-blocking portion 61 and the transmissive portion 62 in the parallax barrier 6 in x-direction. The gap g is the distance between the display surface 71 and the parallax barrier 6. The gap g corresponds to a predetermined distance. For the 3D display device 1 including no parallax barrier 6 being an optical element with refractive power, such as at least one of a lens, a concave mirror, or a convex mirror, between the user and the active area 51 in the display panel 5, the barrier pitch Bp and the gap g correspond to actual dimensions of the individual devices.

The interocular distance E is an uncontrollable variable and is a statistical average. Setting the gap g appropriate for each 3D display device 1 may be difficult. The above Formulas 3 and 4 indicate that the image pitch k may be set precisely to set the OVD d precisely. Limiting the value of the image pitch k lowers flexibility in designing the OVD d. In one or more embodiments of the present disclosure, the number of subpixels 11, or 2n, included in a minimum repeat 54 is not limited to multiples of b. Thus, the image pitch k is designed with higher flexibility. This increases flexibility in designing the OVD d.

With Formulas 2 and 4, the barrier pitch Bp on the display surface 71 is written as Formula 5 below.

$$2n \times \frac{Hp}{b} \times \frac{d}{d + g} \tag{5}$$

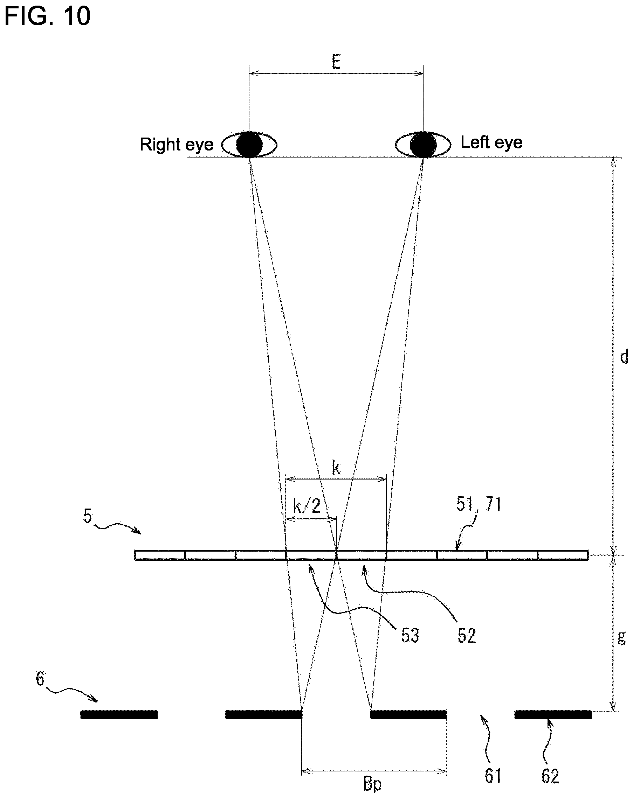

In an embodiment, the parallax barrier 6 may be located between the display panel 5 and the illuminator 4. FIG. 10 is a diagram describing the structure including the parallax barrier 6 located opposite to the eyes of the user from the active area 51 in the display panel 5. The parallax barrier 6 includes the light-blocking portions 61 and the transmissive portions 62. Light from the illuminator 4 behind the parallax barrier 6 travels through the transmissive portions 62 in the parallax barrier 6, passes through the left-eye viewable areas 52 in the active area 51 in the display panel 5, and enters the left eye of the user. Light from the illuminator 4 travels through the transmissive portions 62 in the parallax barrier 6, passes the left-eye light-blocking areas (right-eye viewable areas) 52 in the display panel 5, and reaches the right eye of the user. The first subpixels 11L viewable with the left eye and the second subpixels 11R viewable with the right eye are arranged based on the positions of the subpixels 11 on the active area 51 to display a 3D image to the user.

With the structure in FIG. 10, the OVD d between the display surface 71 and the eyes of the user, the distance g between the display surface 71 and the parallax barrier 6, and the barrier pitch Bp of the parallax barrier 6 satisfy Formulas 6 and 7 below.

$$E : (d + g) = k / 2 : g \tag{6}$$

$$d : k = (d + g) : Bp \tag{7}$$

Formulas 6 and 7 above indicate that the image pitch k may be set precisely to set the OVD d precisely. In the 3D display device 1 in FIG. 10, the number of subpixels 11 included in a minimum repeat 54, or 2n, is not limited to multiples of b. Thus, the OVD d can be designed with higher flexibility.

With Formulas 2 and 7, the barrier pitch Bp in the 3D display device 1 in FIG. 10 is written as Formula 8 below.

$$2n \times \frac{Hp}{b} \times \frac{d+g}{d} \qquad\qquad (8)$$

In the examples of FIGs. 2, 6, and 8, each subpixel 11 in the display panel 5 is longer in y-direction than in x-direction. In one or more embodiments of the present disclosure, the 3D display device 1 may include the display panel 5 with the subpixels 11 each longer in x-direction than in y-direction. Each subpixel 11 may have the same length in x- and y-directions. Example use of a display panel 5 including subpixels 11 each longer in x-direction than in y-direction will be described.

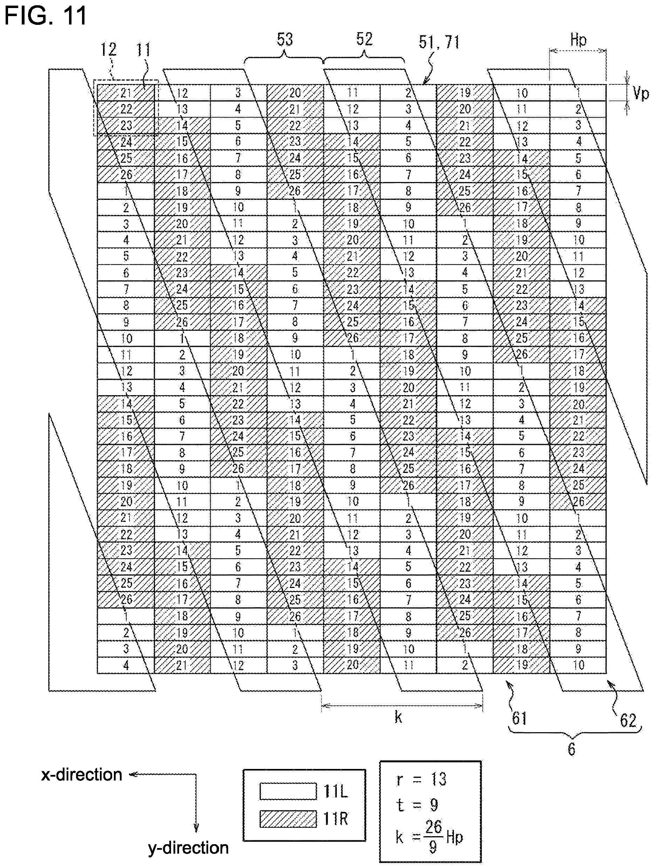

FIG. 11 is a diagram of a display panel 5 in a fourth example as a display surface 71 is viewed from the eyes of the user. In FIG. 11, the display surface 71 is an active area 51. FIG. 11 illustrates the structure of the active area 51 in the display panel 5 in a 3D display device 1 according to one embodiment of the present disclosure. FIG. 11 illustrates the arrangement of the subpixels 11 for displaying a right-eye image and a left-eye image on the active area 51. The active area 51 includes the subpixels 11 each longer in x-direction than in y-direction arranged in x- and y-directions. In the present embodiment, the 3D display device 1 has the same structure as the 3D display device 1 in FIG. 1 except the structures of the display panel 5 and the parallax barrier 6. The same reference numerals denote the components corresponding to those in the above embodiment. The projected areas of the light-blocking portion 61 and the transmissive portion 62 in the parallax barrier 6 on the display panel 5 as viewed from the user are illustrated in FIG. 11.

In FIG. 11, each subpixel 11 corresponds to one of colors R, G, or B. A single pixel 12 includes a set of three subpixels 11, or R, G, and B subpixels 11. For example, multiple subpixels 11 included in a single pixel 12 are arranged in y-direction. For example, subpixels 11 having the same color are arranged in x-direction.

In FIG. 11, the subpixels 11 are each numbered one of 1 to 26 for ease of explanation. The subpixels 11 numbered 1 to 13 each have a half or more of its area included in the left-eye viewable area 52, and are referred to as first subpixels 11L for displaying a left-eye image. The subpixels 11 numbered 14 to 26 each have a half or more of its area included in the left-eye light-blocking area 53, and are referred to as second subpixels 11R for displaying a right-eye image.

In one embodiment, the first subpixels 11L and the second subpixels 11R may be arranged under the rules below.

A subpixel 11 in a column located at the most negative end in x-direction is numbered 1. In FIG. 2, a subpixel 11 at the right upper end is numbered 1. At reference positions, the subpixel 11 to be numbered 1 is, for example, a subpixel 11 located at the most negative end of a y-direction set (the right upper end in FIG. 11) of consecutive first subpixels 11L for displaying a left-eye image. Being at the reference positions indicates that the display panel 5, the parallax barrier 6, and the eyes of the user are located at positions each serving as a reference. The reference positions may be positional relationships between the display panel 5, the parallax barrier 6, and the user when the eyes of the user view the center of the display panel 5 and the parallax barrier 6 from the front.

In the column numbered 1, the subpixels 11 are numbered 1 to 2r (r is a positive integer) in ascending order in y-direction. The integer r is a first predetermined number. The first predetermined number r may be referred to as the number of subpixels 11 assigned to one eye. The number is reset to 1 after reaching 2r. Thus, the subpixels 11 in a single column are numbered 1 to 2r (r is a positive integer) repeatedly. In the example of FIG. 11, the integer r is 13, and the maximum number is 26.

A number obtained by adding t (t is a positive integer less than or equal to r) to the number on each subpixel 11 in the numbered column is assigned to an adjacent subpixel 11 in a column adjacent in x-direction (at the left in FIG. 2). The integer t is a second predetermined number. The second predetermined number t may be referred to as the number of subpixels 11 through which the boundary between the left-eye viewable area 52 and the left-eye light-blocking area 53 passes in y-direction while extending by a single pixel in x-direction. When the number obtained by adding the second predetermined number t is greater than 2r, 2r is subtracted from the number obtained by adding the second predetermined number t. The resultant number is assigned to the adjacent subpixel 11. This operation is repeated sequentially on adjacent columns. In the example of FIG. 11, the second predetermined number t is 9.

When the eyes of the user are at the reference positions with respect to the display panel 5 and the parallax barrier 6, the subpixels 11 numbered 1 to 2r in the subpixels 11 numbered as described above are the first subpixels 11L for displaying a left-eye image. The subpixels 11 numbered (r + 1) to 2r are the second subpixels 11R for displaying a right-eye image.

When a picture element of the subpixel 11 has a vertical pitch Vp in y-direction and a horizontal pitch Hp in x-direction on the display surface 71, the second predetermined number t and the barrier inclination angle θ satisfy Formula 9.

$$\tan\theta = Hp/tVp \qquad\qquad (9)$$

The horizontal pitch Hp of the subpixel 11 is also referred to as a pixel pitch.

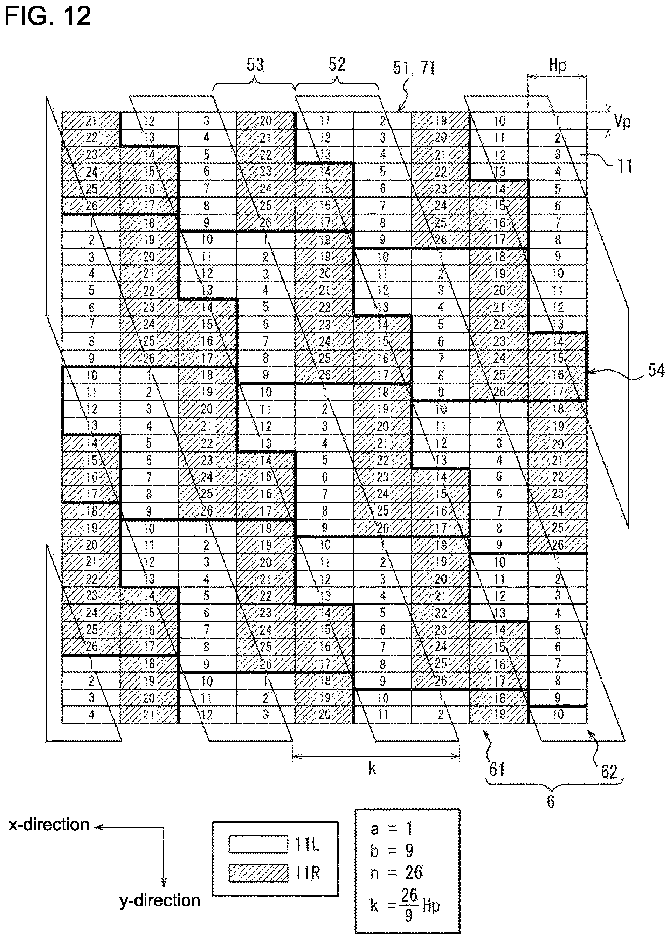

The first subpixels 11L and the second subpixels 11R arranged on the display surface 71 in FIG. 11 may correspond to a subpixel group as a minimum repeat 54 indicated by a thick line in FIG. 12 repeatedly arranged on the display surface 71. The edge line of the transmissive portion 62 crosses nine vertical pitches Vp while crossing a single horizontal pitch Hp in x-direction. The first predetermined number r is equal to a half of the number of subpixels 11 included in the minimum repeat 54, or 2n. In other words, the first predetermined number r is equal to n. The natural number a corresponds to 1. The second predetermined number t is equal to b. The subpixels are changed between the first subpixels 11L and the second subpixels 11R with substantially the same method as for the display surface 71 in, for example, FIGs. 2, 6, and 8 in the first to third examples and for the display surface 71 in FIG. 11. However, changing between the first subpixels 11L and the second subpixels 11R will be described below focusing on shifting the display boundary, unlike the method described for the display surface 71 in, for example, FIGs. 2, 6, and 8.

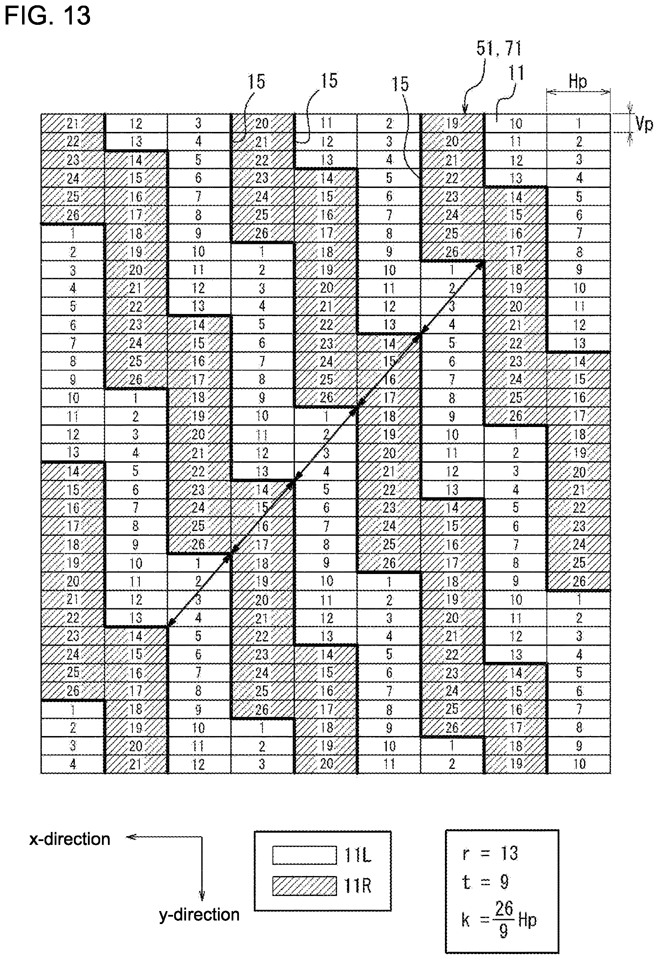

As illustrated in FIG. 13, imaginary display boundaries 15 between the first subpixels 11L and the second subpixels 11R can separate the first subpixels 11L corresponding to numbers 1 to 13 and the second subpixels 11R corresponding to numbers 14 to 26. Each display boundary 15 is highlighted with a thick line in FIG. 13. The display boundaries 15 occur in a periodically stepped manner.

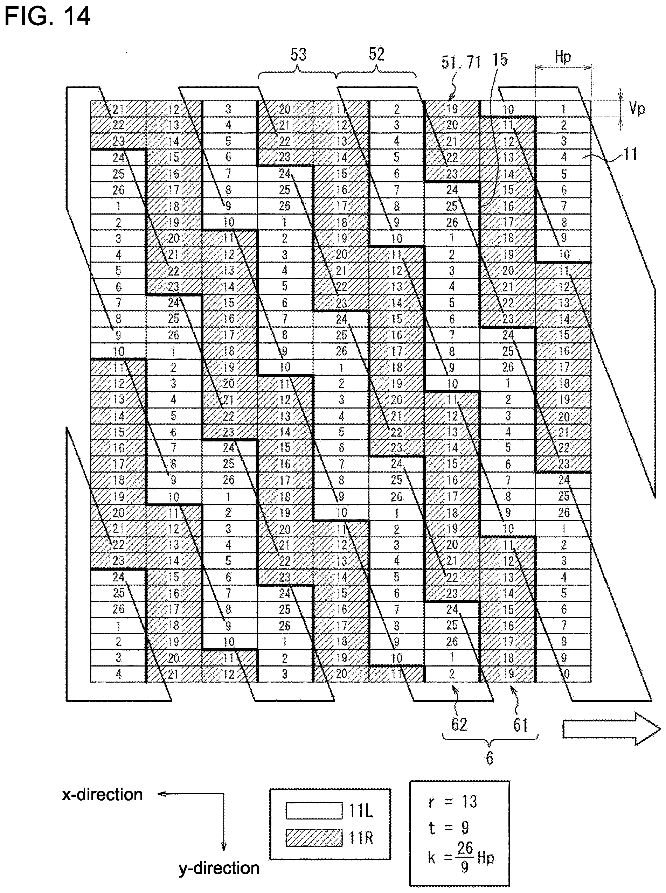

The controller 7 can shift the display boundary 15 based on the positions of the eyes of the user detected by the detector 2. FIG. 14 illustrates the positions of the display boundaries 15 when the parallax barrier 6 as viewed from the eyes of the user is relatively displaced from its position in FIG. 11 in the negative x-direction (the direction indicated by the arrow). Such displacement may occur when the eyes of the user move relatively to the left. In FIG. 14, the same numbers denote the same subpixels 11 as in FIGs. 11 and 13. As illustrated in FIG. 14, in response to a change in the positions of the eyes of the user, the controller 7 shifts the display boundaries 15 and change some of the first subpixels 11L to second subpixels 11R. In the example of FIG. 14, the first subpixels 11L numbered 11 to 13 for displaying a left-eye image in FIGs. 11 and 13 are changed to second subpixels 11R for displaying a right-eye image. The second subpixel 11R numbered 24 to 26 for displaying a right-eye image in FIGs. 11 and 13 are changed to first subpixels 11L for displaying a left-eye image. The display boundaries 15 are entirely shifted by threefold the dimension of the vertical pitch Vp in the negative y-direction (upward in FIG. 14). The numbers of first subpixels 11L and second subpixels 11R changed by the controller 7 differ depending on the amount of displacement in the positions of the eyes of the user.

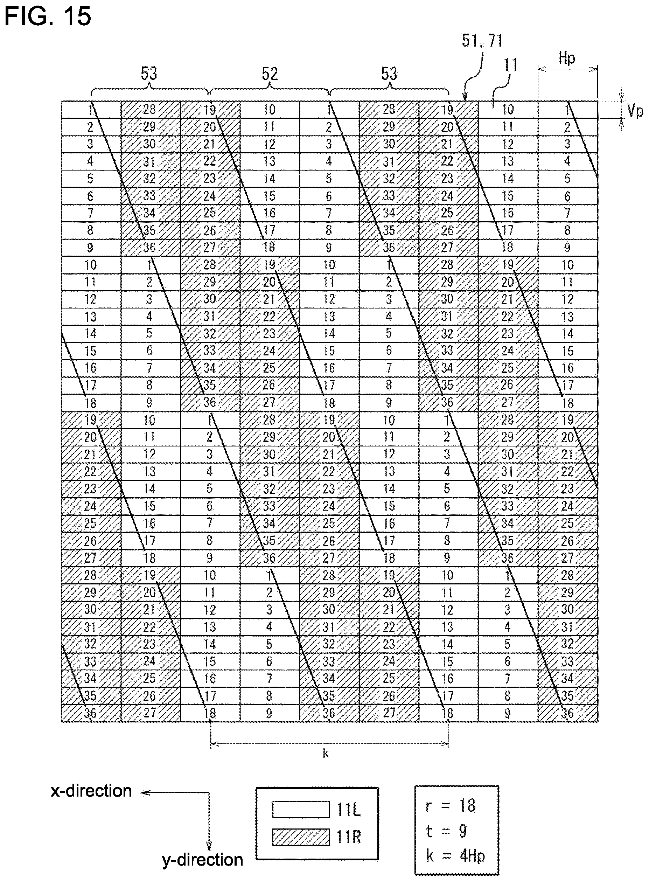

As illustrated in FIG. 13, the first subpixels 11L and the second subpixels 11R each include the first predetermined number r of subpixels 11 aligned continuously in each column. Areas between two adjacent columns each include a set of first subpixels 11L and second subpixels 11R displaced in y-direction by the second predetermined number t. The first predetermined number r is greater than the second predetermined number t, and may not be a multiple of the second predetermined number t. With the first predetermined number r not being a multiple of the second predetermined number t, the identically shaped display boundaries 15 occur periodically and repeatedly obliquely in both x- and y-directions as indicated by the double-headed arrows in FIG. 13. In a comparative example of FIG. 15 (described later), identically shaped display boundaries 15 occur periodically and repeatedly in x-direction alone.

The 3D display device 1 according to one or more embodiments of the present disclosure can set the image pitch k more precisely than the device in the comparative example. This will be described with reference to FIGs. 15 to 17.

FIG. 15 is a diagram illustrating the arrangement of first subpixels 11L and second subpixels 11R on a display surface 71 in a 3D display device according to the comparative example. FIG. 15 illustrates straight lines extending obliquely indicating display boundaries 15 between left-eye viewable areas 52 and left-eye light-blocking areas 53. For the arrangement of the subpixels 11 in FIG. 15, the first predetermined number r is 18, and the second predetermined number t is 9. The first subpixels 11L are numbered 1 to 18. The second subpixels 11R are numbered 19 to 36. As illustrated in FIG. 15, when the first subpixels 11L and the second subpixel 11R are arranged to satisfy r = 2t, the image pitch k is limited to fourfold the horizontal pitch Hp of each subpixel 11.

For the display panel 5 including subpixels 11 as illustrated in FIG. 15, the image pitch k being an integer multiple of the horizontal pitch Hp of the subpixel 11 is readily usable. In this structure, two first subpixels 11L and two second subpixels 11R are arranged repeatedly and regularly in x-direction. In Patent Literature 1, the 3D display device including a parallax barrier 6 extending in the diagonal direction of a subpixel also includes an image pitch k being an integer multiple of a horizontal pitch Hp. The display boundaries 15 shifted in the horizontal direction to generate parallax in x-direction are intuitively usable.

As described above, however, the inventors have noticed that a method according to one or more embodiments of the present disclosure allows the first subpixels 11L for the left eye and the second subpixels 11R for the right eye to be arranged without the image pitch k being limited to an integer multiple of the horizontal pitch Hp. The image pitch k can thus be set more precisely than using the horizontal pitch Hp as the unit of control. The image pitch k is determined by Formula 10 below.

$$k = Hp \times 2r / t \qquad (10)$$

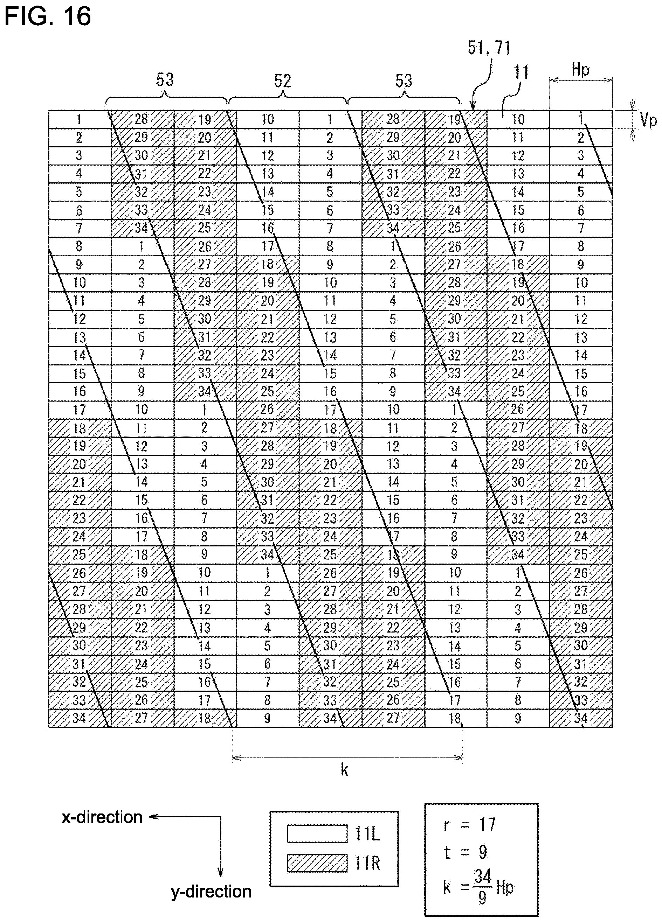

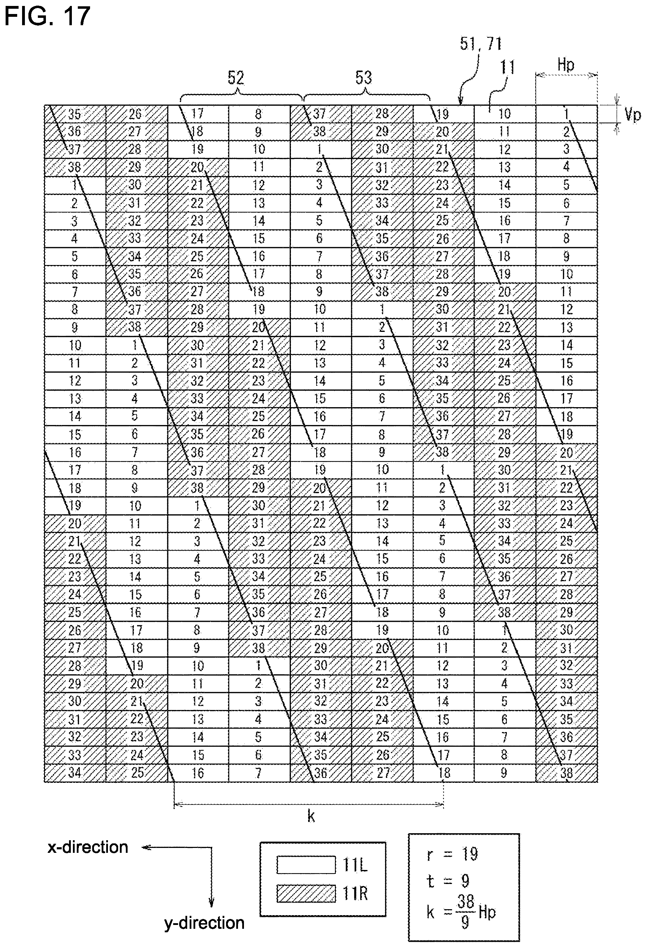

In other words, the image pitch k is substantially equal to a value twice the first predetermined number r divided by the second predetermined number t and then multiplied by the horizontal pitch Hp being a pitch in the first direction of the subpixel 11. When the image pitch k is determined, the barrier pitch Bp can be determined based of the image pitch k, the OVD d, and the gap g. The subpixels 11 in FIG. 11 are arranged as described above based on this idea. Other example arrangements of subpixels 11 on the display surface 71 according to one or more embodiments of the present disclosure are illustrated in FIGs. 16 and 17.

FIG. 16 illustrates a fifth example of the arrangement of subpixels 11 for displaying a right-eye image and a left-eye image in a display surface 71 designed with the first predetermined number r being 17 and the second predetermined number t being 9. The first predetermined number r is greater than the second predetermined number t, and is not an integer multiple of the second predetermined number t. This arrangement of subpixels 11 generates an image pitch k of 34/9 (about 3.78) times the horizontal pitch Hp.

FIG. 17 illustrates a sixth example of the arrangement of subpixels 11 for displaying a right-eye image and a left-eye image in a display surface 71 designed with the first predetermined number r being 19 and the second predetermined number t being 9. The first predetermined number r is greater than the second predetermined number t, and is not an integer multiple of the second predetermined number t. This arrangement of subpixels 11 generates an image pitch k of 38/9 (about 4.22) times the horizontal pitch Hp.

In FIGs. 16 and 17, the image pitch k is a multiple of the horizontal pitch Hp, but not an integer multiple. The image pitch k can be set more precisely by setting the first predetermined number r and the second predetermined number t as appropriate. In one or more embodiments of the present disclosure, the 3D display device 1 can thus set the OVD d with higher flexibility.

In the structures according to embodiments illustrated in FIGs. 11, 16, and 17, each subpixel 11 has the horizontal pitch Hp longer than the vertical pitch Vp. The horizontal pitch is in x-direction being the parallax direction. With the subpixels 11 arranged in this manner, limiting the image pitch k to an integer multiple of the horizontal pitch Hp particularly decreases flexibility in designing the OVD d compared with the arrangement including subpixels 11 with the horizontal pitch Hp shorter than the vertical pitch Vp. This can restrict the design. In one or more embodiments of the present disclosure, the 3D display device 1 is particularly useful to reduce restrictions in setting the OVD d when the subpixels 11 are arranged to be longer in the parallax direction.

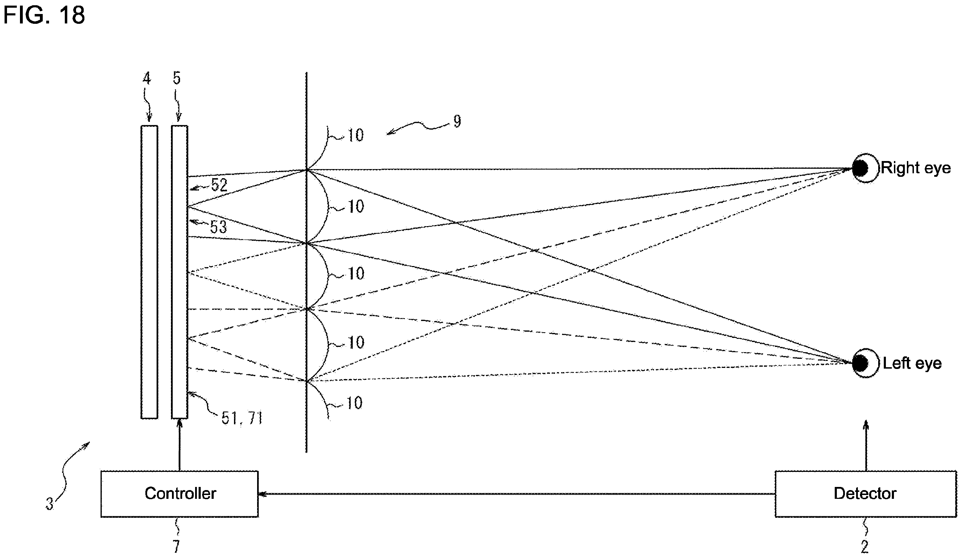

FIG. 18 illustrates a 3D display device 1 according to one of embodiments. In the embodiments described above, the 3D display device 1 includes the parallax barrier 6 as an optical element. The 3D display device 1 may include, as an optical element, a lenticular lens 9 in place of the parallax barrier 6. In this structure, the lenticular lens 9 includes an array of microscopic, elongated, and semicylindrical lenses 10 extending obliquely in x- and y-directions.

A display panel 5 in a 3D display device 1 in FIG. 18 is viewed directly from the user. Thus, the display surface 71 in a space visually perceived by the user matches the active area 51. An area on an active area 51 in the display panel 5 viewable from the left eye located at the OVD d may be referred to as left-eye viewable areas 52. An area on the active area 51 in the display panel 5 viewable from the right eye of the user located at the OVD d may be referred to as left-eye light-blocking areas 53 (right-eye viewable areas). The lenticular lens 9 deflects at least a part of image light of a left-eye image emitted from the left-eye viewable areas 52 in the display panel 5 toward the left eye of the user. The lenticular lens 9 deflects at least a part of image light of a right-eye image emitted from the left-eye light-blocking areas 53 (right-eye viewable areas) in the display panel 5 toward the right eye of the user located at the OVD d. In other words, the lenticular lens 9 is an optical element that selectively transmits at least a part of the left-eye image in a direction along an optical path toward the left eye of the user and at least a part of the right-eye image in a direction along an optical path toward the right eye of the user.

The lenticular lens 9 used as an optical element produces the same or similar effects as the parallax barrier 6. The image pitch k may be a pitch in the first direction of the left-eye viewable area 52. The barrier inclination angle θ may be an angle between the left-eye viewable area 52 and y-direction on the active area 51. The display positions of the subpixels 11 for a left-eye image and a right-eye image on the active area 51 reflect the effects from the semicylindrical lenses 10 in the lenticular lens 9 that, for example, refract or deflect image light.

Head-Up Display

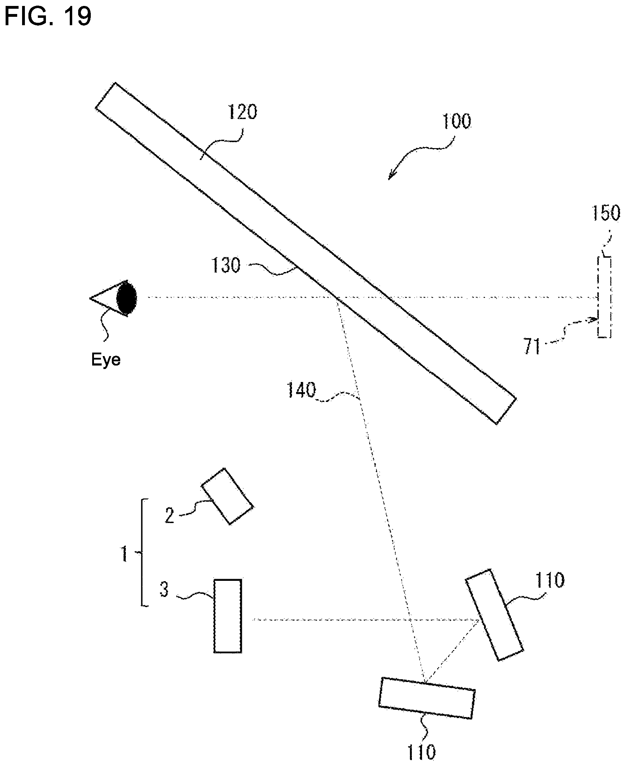

In one of embodiments, the 3D display device 1 may be incorporated in a head-up display 100 as illustrated in FIG. 19. The head-up display 100 may also be referred to as a HUD. The HUD 100 includes the 3D display device 1, an optical member 110, and a projection receiving member 120 including a projection screen 130. The optical member 110 and the projection receiving member 120 are included in an optical system that forms a virtual image in the field of view of the user by projection. In one or more embodiments of the present disclosure, the optical member 110 and the projection receiving member 120 may be collectively referred to as, simply, an optical system. The HUD 100 directs image light from the 3D display device 1 to reach the projection receiving member 120 through the optical member 110. The HUD 100 directs image light reflected from the projection receiving member 120 to reach the left eye and the right eye of the user. In other words, the HUD 100 directs the image light to travel from the 3D display device 1 to the left eye and the right eye of the user along an optical path 140 indicated by the broken line. The user can view image light reaching the eyes along the optical path 140 as a virtual image 150. The 3D display device 1 controls the display in accordance with the positions of the left eye and the right eye of the user to provide a stereoscopic view in accordance with the movement of the user.

In the HUD 100, the display surface 71 is at a position at which the virtual image 150 is displayed. The position at which the virtual image 150 is displayed is a position at which an image displayed on the active area 51 is visually perceived as a virtual image by the user. In the HUD 100, the barrier inclination angle θ on the active area 51 in the display panel 5 is an angle formed by each transmissive portion 62 in the parallax barrier 6 projected on the display surface 71 with the second direction. The HUD 100 projects the display panel 5 and the parallax barrier 6 onto the display surface 71 through the optical system that forms a virtual image from a point at the OVD d at which the eyes of the user are located. The barrier inclination angle θ is, for example, set to satisfy Formula 1 described above on the display surface 71 perceived as a virtual image by the user. The image pitch k on the display surface 71 of the display panel 5 is a pitch in x-direction of the multiple transmissive portions 62 in the parallax barrier 6 projected on the display surface 71. The image pitch k is set to satisfy Formula 2 described above. In one or more embodiments of the present disclosure, the HUD 100 does not limit the image pitch k to be an integer multiple of the horizontal pitch Hp. The image pitch k is thus designed with higher flexibility.

In the HUD 100, the user at the OVD d visually perceives the display surface 71 as a virtual image. Formulas 3 to 10 are satisfied in a virtual image system as well. In the virtual image system, the barrier pitch Bp is a pitch of the transmissive portion 62 in x-direction in a virtual image of the parallax barrier 6, the gap g is a distance between a virtual image of the active area 51 in the display panel 5 and a virtual image of the parallax barrier 6, the OVD d is a distance between the virtual image of the active area 51 in the display panel 5 (the display surface 71) and the user, and the image pitch k is a pitch in x-direction for the multiple transmissive portions 62 in the parallax barrier 6 projected on the display surface 71.

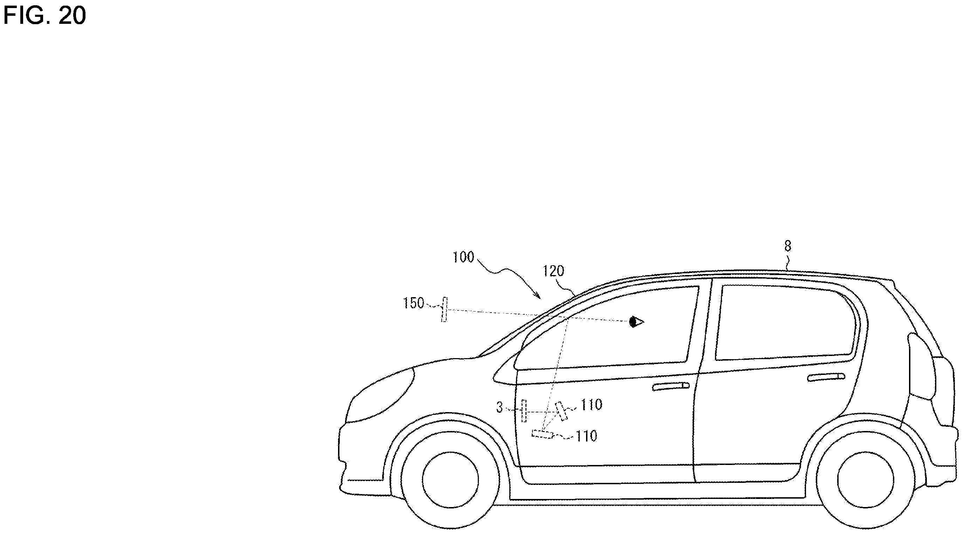

As illustrated in FIG. 20, the HUD 100 including the 3D display device 1 may be mounted on a movable body. The HUD 100 including the 3D display device 1 or the 3D display device 1 may include components that also serve as devices or components included in the movable body. For example, the movable body may use a windshield as the projection receiving member 120 in the HUD 100.

In one or more embodiments of the present disclosure, examples of the movable body include a vehicle, a vessel, and an aircraft. Examples of the vehicle in the present disclosure include, but are not limited to, an automobile and an industrial vehicle, and may also include a railroad vehicle, a community vehicle, and a fixed-wing aircraft traveling on a runway. Examples of the automobile include, but are not limited to, a passenger vehicle, a truck, a bus, a motorcycle, and a trolley bus, and may also include another vehicle traveling on a road. Examples of the industrial vehicle include an industrial vehicle for agriculture and an industrial vehicle for construction. Examples of the industrial vehicle include, but are not limited to, a forklift and a golf cart. Examples of the industrial vehicle for agriculture include, but are not limited to, a tractor, a cultivator, a transplanter, a binder, a combine, and a lawn mower. Examples of the industrial vehicle for construction include, but are not limited to, a bulldozer, a scraper, a power shovel, a crane vehicle, a dump truck, and a road roller. Examples of the vehicle include a human-powered vehicle. The classification of the vehicle is not limited to the above examples. Examples of the automobile may include an industrial vehicle travelling on a road, and one type of vehicle may fall within multiple classes. Examples of the vessel in the present disclosure include a jet ski, a boat, and a tanker. Examples of the aircraft in the present disclosure include a fixed-wing aircraft and a rotary-wing aircraft.


Method for Designing 3D Display Device and Others

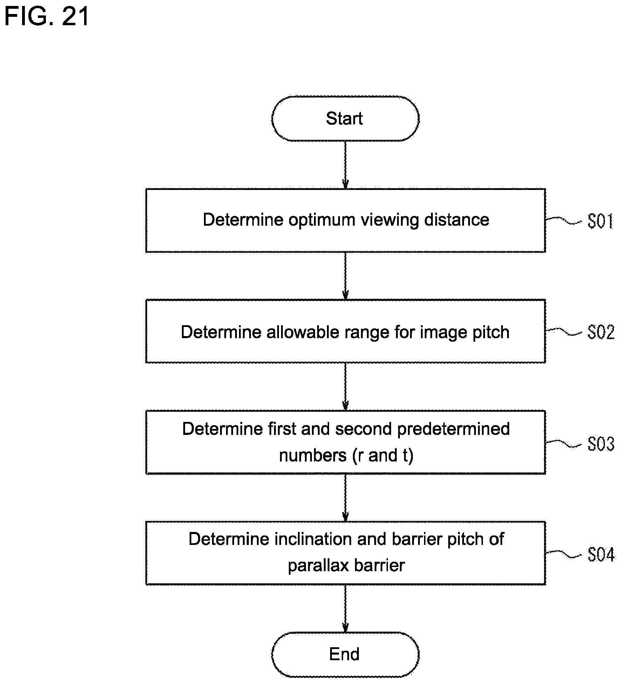

A method for designing the 3D display device 1 and the HUD 100 (hereafter referred to as 3D display device and others) according to one or more embodiments of the present disclosure will be described with reference to FIG. 21 based on the examples illustrated in FIGs. 11 and 15 to 17. The method for designing the 3D display device and others includes designing, for example, the arrangement of subpixels 11 on the display panel 5 and the shape of the parallax barrier 6.

In one or more embodiments of the present disclosure, the 3D display device 1 is used in various environments. The use environments can substantially determine the specifications for the distance from the parallax barrier 6 to the eyes of the user. For example, when a HUD is mounted on a vehicle, the position of the head of the driver as a user is limited to a predetermined range. When a HUD is used in an amusement device such as a pachinko machine or a slot machine, the distance between the amusement machine and the eyes of the user is limited. In one or more embodiments of the present disclosure, the 3D display device and others are designed first by determining the OVD d based on their use (step S01). The determined OVD d may be in a predetermined range.

An allowable range for the image pitch k is then determined based on parameters such as the OVD d determined in step S01, the average interocular distance E of the user, and the usable range for the gap g between the display surface 71 and the parallax barrier 6 (step S02). In one or more embodiments of the present disclosure, the designing method determines the image pitch k without the image pitch k being limited to an integer multiple of the horizontal pitch Hp of the display panel 5.

Subsequently, the first predetermined number r and the second predetermined number t being positive integers are determined to allow the image pitch k to fall within the range for the image pitch k determined in step S02 (step S03). The image pitch k, the first predetermined number r, and the second predetermined number t satisfy Formula 10 described above. The first predetermined number r and the second predetermined number t are stored into the controller 7 for use. The controller 7 uses the first predetermined number r and the second predetermined number t to assign the first subpixel 11L and the second subpixel 11R to the subpixels 11 on the active area 51 in the display panel 5 when the 3D display device and others are in use.

In response to the first predetermined number r and the second predetermined number t being determined, the barrier inclination angle θ of the parallax barrier 6 can be determined based on Formula 9 described above. The barrier pitch Bp of the parallax barrier 6 is also determined from the image pitch k, the OVD d, and the gap g. The shape of the parallax barrier 6 is thus determined (step S04).

The processing described above determines the arrangement of the subpixels 11 and the shape of the parallax barrier 6 in the 3D display device and others. The 3D display device 1 can thus have the structure based on an intended OVD d.

In the examples of FIGs. 2, 6, and 8, each subpixel 11 in the display panel 5 is longer in y-direction than in x-direction. In one or more embodiments of the present disclosure, the 3D display device 1 may include the display panel 5 with the subpixels 11 each longer in x-direction than in y-direction. Each subpixel 11 may have the same length in x- and y-directions. Example use of a display panel 5 including subpixels 11 each longer in x-direction than in y-direction will be described.

Structure in Present Embodiment

The 3D display device 1 according to one or more embodiments of the present disclosure will now be described. The same reference numerals denote the components corresponding to those in the above embodiments. In the present embodiment, the 3D display device 1 includes the display panel 5, the parallax barrier 6 as an optical element, and the controller 7. The display panel 5 includes an active area 51 including multiple subpixels 11 arranged in a grid in a first direction x and in a second direction y substantially orthogonal to the first direction x, and can display a parallax image being a composite of a first image and a second image on the active area 51. The parallax barrier 6 includes multiple openings that define the traveling direction of light of the parallax image. The controller 7 controls the display panel 5 to display the composite of the first image and the second image based on the position of one of the first eye or the second eye detected by the detector 2. In the present embodiment, the first eye corresponds to the right eye, and the second eye corresponds to the left eye.

The controller 7 performs a first shift process, a second shift process, and a third shift process. The first shift process is a process of shifting the active area 51 outward with respect to the position of one eye detected by the detector 2 to increase the shift amount by one subpixel in every first cycle set in the controller 7. The second shift process is a process of shifting a boundary in the first shift process by one subpixel in response to one of the first eye or the second eye detected by the detector 2 moving by one subpixel. The third shift process is a process of shifting the subpixels 11 in a second cycle by one subpixel and shifting the boundary by the number of subpixels in the first cycle. The subpixels 11 in the second cycle are determined, with the eyes of the user, as the product of the number of the subpixels in the first cycle multiplied by the light collection efficiency.

In the 3D display device 1 described above, the light collection efficiency is an integer portion of the quotient of a dividend being the number of subpixels 11 that emit image light of one of the first image or the second image viewable through the openings divided by a divisor being the number of subpixels 11 that emit image light of the first image and the second image when a parallax image is viewed with one of the first eye or the second eye through the openings in the parallax barrier 6 from a position at a viewing distance $L_R$ away in a direction perpendicular to the display surface 71 of the display panel 5. In other words, the light collection efficiency is the ratio of the number of subpixels emitting image light of one of the first image or the second image viewable through the openings to the number of subpixels emitting image light of the first image and the second image when a reference parallax image is viewed with one of the first eye or the second eye through the openings in the parallax barrier 6 from a position at a viewing distance $L_R$ away in a direction perpendicular to the display surface 71 of the display panel 5.

In the 3D display device 1 described above, the controller 7 performs two of the first shift process, the second shift process, or the third shift process in response to the subpixels 11 in the first cycle overlapping the subpixels 11 in the second cycle.

In the 3D display device 1 described above, the subpixels 11 shifted in the second shift may be shifted in the same direction as one of the first eye or the second eye moves.

In the 3D display device 1 described above, the subpixels 11 shifted in the third shift process may be shifted in the direction opposite to the direction in which one of the first eye or the second eye moves.

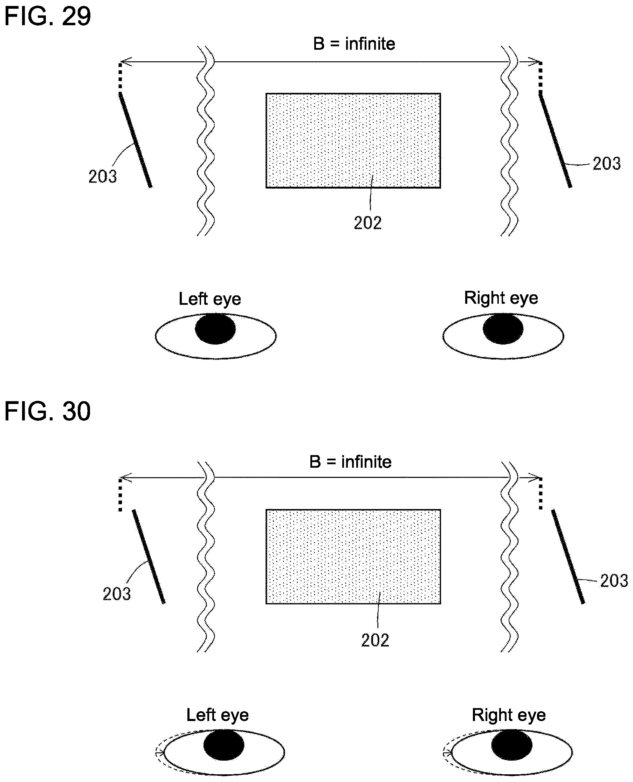

In the 3D display device 1 described above, when the active area 51 in a space visually perceived by the user is a display surface 71, a boundary line 203 (refer to FIG. 29) on the display surface 71 being the active area 51 may extend in a direction inclined by an angle written as Formula 11 below.

$$\tan\theta = \frac{a \times Hp}{b \times Vp}$$

$$\text{and } a \neq b \qquad\qquad (11)$$

In the formula, Hp is the dimension of a subpixel 11 on the display surface 71 in the first direction x, Vp is the dimension of a subpixel 11 on the display surface 71 in the second direction y, θ is an angle of the boundary line 203 on the display surface 71 with respect to the second direction y, and a and b are natural numbers.

Detailed Structure

Light Collection Efficiency (Picture Element Control after Head Movement)

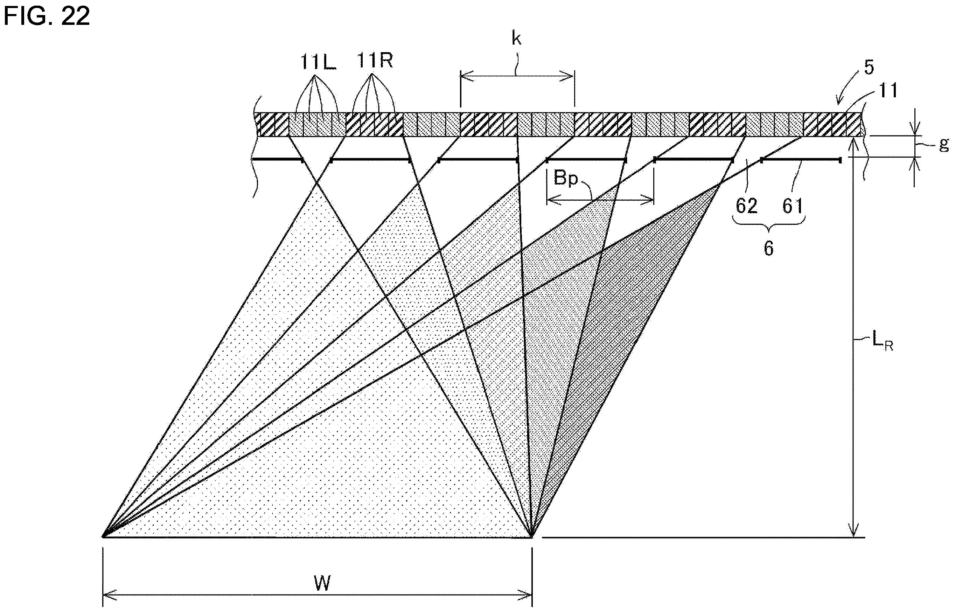

FIG. 22 is a diagram illustrating the range of the field of view with a first light collection efficiency. The first light collection efficiency is a light collection efficiency of 100%. The first light collection efficiency may be referred to as a complete light collection. When the head of the user remains stationary at the position at the viewing distance $L_R$, an optimum viewing width that allows optimum viewing of a 3D image is infinite. With a light collection efficiency of 100% and at the OVD d, the optimum viewing width is infinite, and the user views a screen 202 illustrated in FIG. 29 that displays no boundary line 203 of the optimum viewing width on the 3D image screen in a region W. In the region W, the user can view a 3D image including a left-eye image (first subpixels 11L) and a right-eye image (second subpixels 11R) without crosstalk. In the first light collection efficiency state, the triangles indicating the range of the field of views for the first eye and the second eye have the same base.

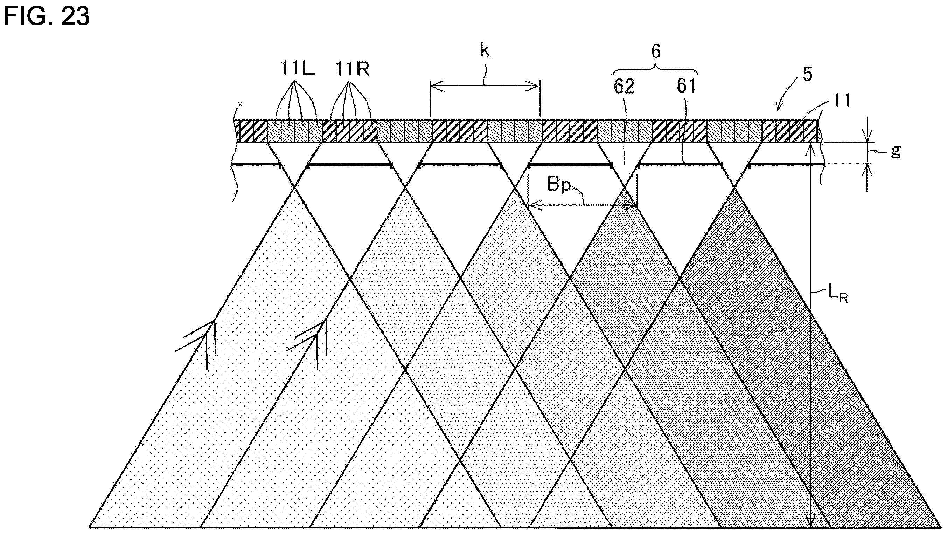

FIG. 23 is a diagram illustrating the range of the field of view with a second light collection efficiency. The second light collection efficiency is a light collection efficiency of 0%. With the second light collection efficiency, light is not optically collected. With a light collection efficiency of 0%, the triangles each indicating the range of the field of view of an image for the first eye and the second eye and at the viewing distance $L_R$ have oblique sides parallel to each other. Each triangle has a base displaced from its adjacent base by eight subpixels as the unit of control.

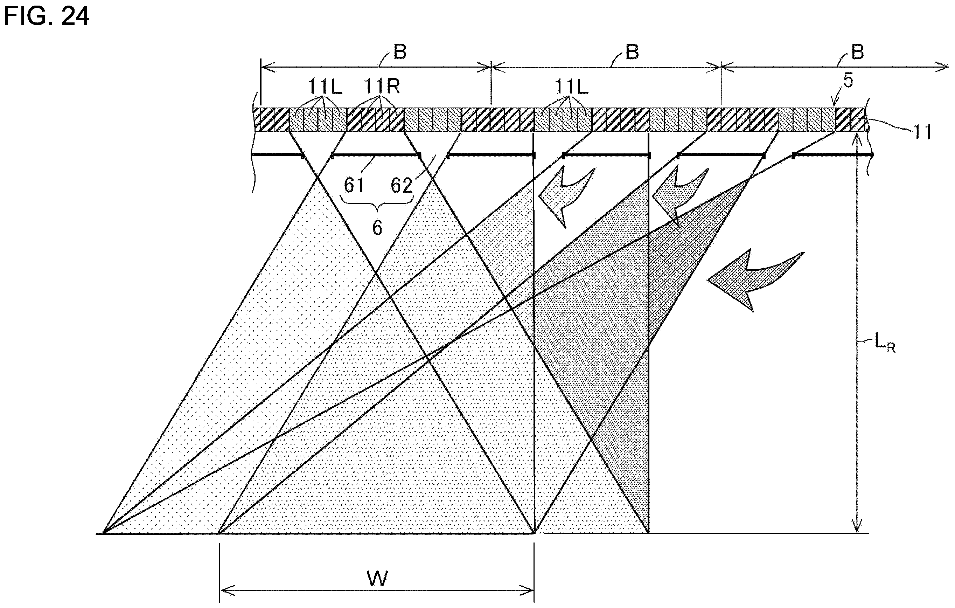

FIG. 24 is a diagram illustrating the range of the field of view with the second light collection efficiency. For the second light collection efficiency (a light collection efficiency of 0%), the controller 7 shifts subpixels in controlling the display panel 5 to allow the triangles each indicating the range of the field of view of an image for each eye to have the same base. To allow the region W in which the bases of adjacent triangles overlap to be a region for viewing a left-eye image without crosstalk, the first subpixels 11L and the second subpixels 22R in the display panel 5 are controlled with respect to the light-blocking portions 61 and the transmissive portions 62 in the parallax barrier 6.

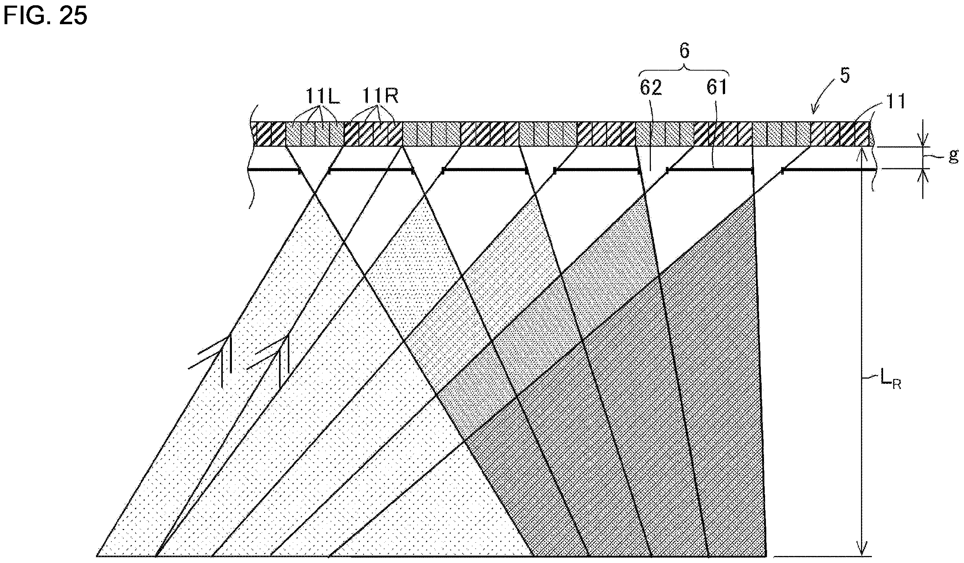

FIG. 25 is a diagram illustrating the range of the field of view with a third light collection efficiency. With the third light collection efficiency, light is optically collected but is not collected completely. The third light collection efficiency is between the first light collection efficiency and the second light collection efficiency. The third light collection efficiency described herein is a light collection efficiency of 50%, but is not limited to 50%. With a light collection efficiency of 50%, when the head of the user moves by one subpixel to the right, the displaced bases of the triangles indicating the range of the field of view of an image for one eye are to overlap by four subpixels out of eight subpixels (50% of the number of subpixels). With a light collection efficiency other than 50%, the number of pixels to overlap increases or decreases based on the light collection efficiency. In this case, as illustrated in FIG. 30, when the head moves by one subpixel to the right, the boundary line 203 of the shift width is also shifted by one subpixel to the right at the same time.

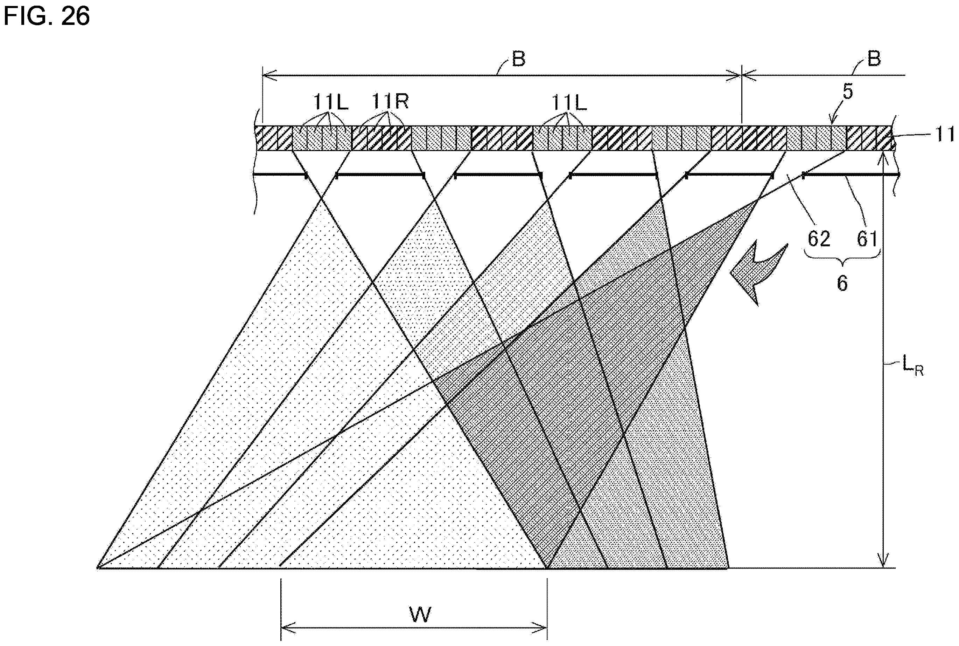

FIG. 26 is a diagram illustrating the range of the field of view with the third light collection efficiency. In this case, the controller 7 shifts the display panel 5 by the shift width that is twice the shift width with the first light collection efficiency (e.g., a light collection efficiency of 100%), or by B. This forms the region W for viewing a 3D image without crosstalk.

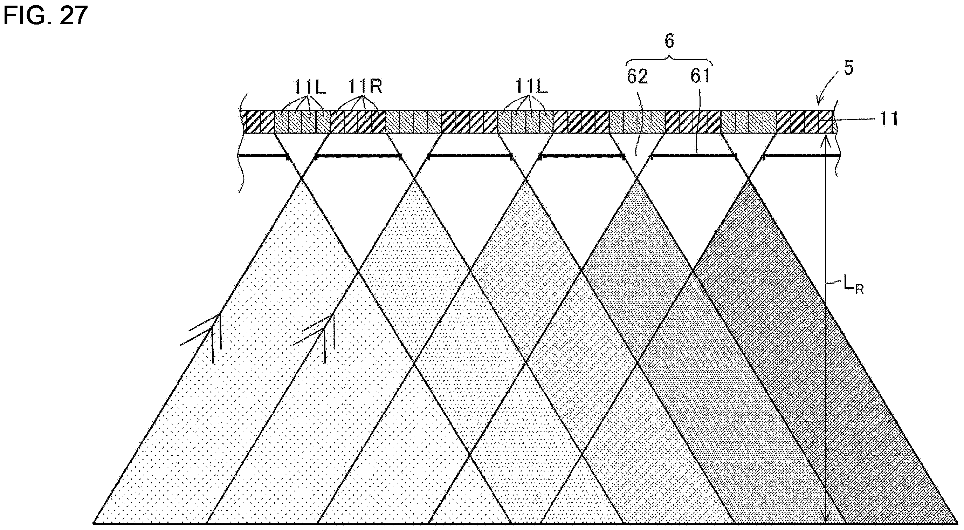

FIG. 27 is a diagram illustrating the range of the field of view with the second light collection efficiency. When the head of the user remains stationary, the triangles indicating the range of the field of view of an image for one eye have different bases with the second light collection efficiency (e.g., a light collection efficiency of 0%). With the second light collection efficiency, the triangles have oblique sides parallel to each other, and their bases are each displaced by eight subpixels as the unit of control (≈ 0/8).

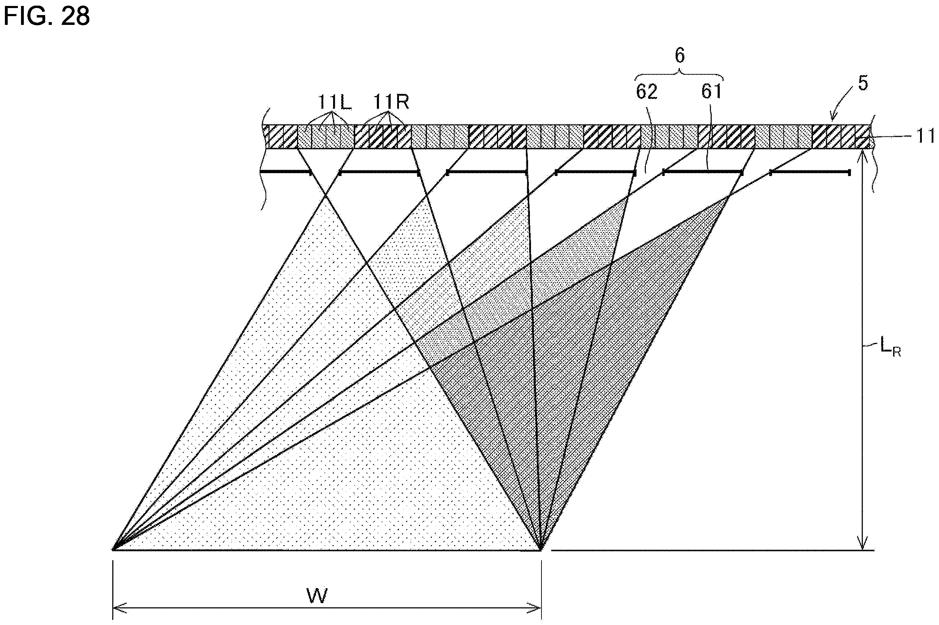

FIG. 28 is a diagram illustrating the range of the field of view with the first light collection efficiency. When the head remains stationary with the first light collection efficiency (a light collection efficiency of 100%), the triangles indicating the range of the field of view of an image for one eye have the base matching the field of view region W without crosstalk (≈ 8/8).

FIG. 29 is a diagram of a viewed screen with the head of the user being stationary and with the first light collection efficiency (e.g., a light collection efficiency of 100%). As described above with reference to FIG. 22, the 3D image screen is a screen viewed by the user. With the first light collection efficiency and the first and the second eyes being stationary at the OVD d, the shift width B is infinite. Thus, no boundary line 203 of the shift width B appears in the 3D image on the viewed screen 202.

FIG. 30 is a diagram of a viewed screen 202 after the head of the user moves by one subpixel to the right with the first light collection efficiency (e.g., a light collection efficiency of 100%). When the head of the user moves by one subpixel to the right, the controller 7 performs, at the same time, the first shift process of shifting the boundary lines 203 of a parallax image at the left and the right of the display panel 5 by one subpixel to the right.

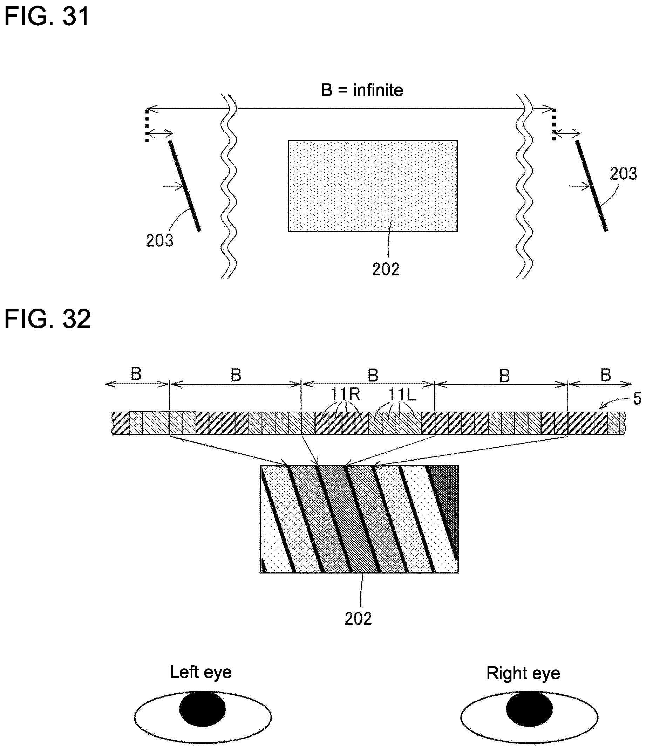

FIG. 31 is a diagram of a viewed screen 202 with the first light collection efficiency after the head of the user moves by a first distance to the right. In this figure, with the first light collection efficiency, the viewing distance $L_R$ is equal to the OVD, and the horizontal pitch Hp uses four subpixels. As illustrated in FIG. 31, a stereoscopic view cannot be maintained unless the entire picture elements of the 3D image screen shift the display position of a displayed image by one subpixel each time the head moves by the first distance. The first distance is a distance that causes the displayed image to be shifted by one subpixel with the first light collection efficiency. The first distance is, for example, 15.75 mm (63 mm/4). With the first light collection efficiency, when the head moves by the first distance to the right, the controller 7 performs the second shift process of shifting the boundary line 203 of the shift width for the parallax image on the display panel 5 by the first distance to the right. In this case, the picture elements in the 3D image screen are shifted by one subpixel to the left as compared with when the head is stationary.

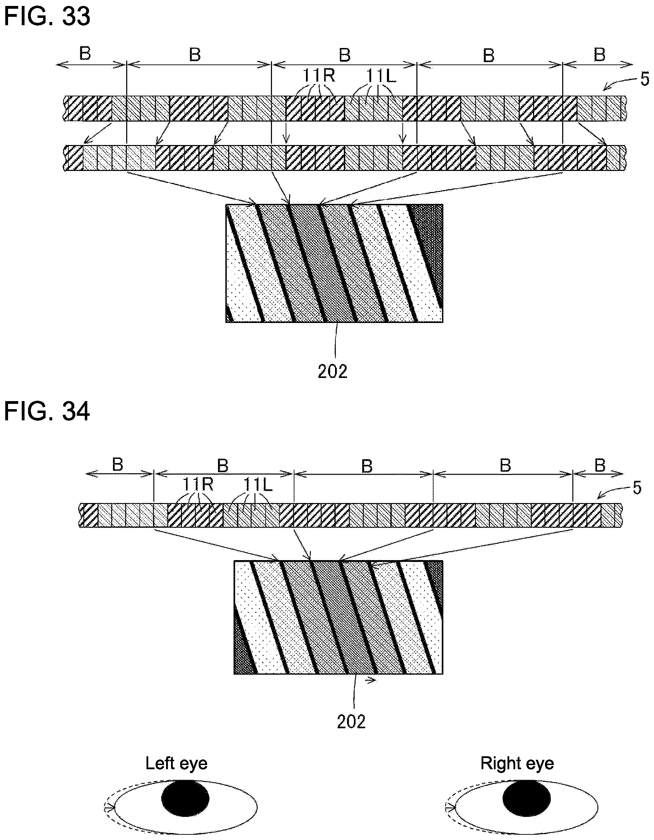

FIG. 32 is a diagram of a viewed screen 202 with the head of the user being stationary with the second light collection efficiency (e.g., a light collection efficiency of 0%). When the head is stationary with the second light collection efficiency and the viewing distance $L_R$ is equal to the OVD d with the first light collection efficiency (e.g., a light collection efficiency of 100%), the controller 7 performs the third shift process. In the third shift process, the boundary lines of a central area have an interval of a shift width B of 15.75mm (63 mm/4) on the display panel 5 and serve as references, and areas located outside the reference boundary lines are each shifted by one subpixel as illustrated in FIG. 33.

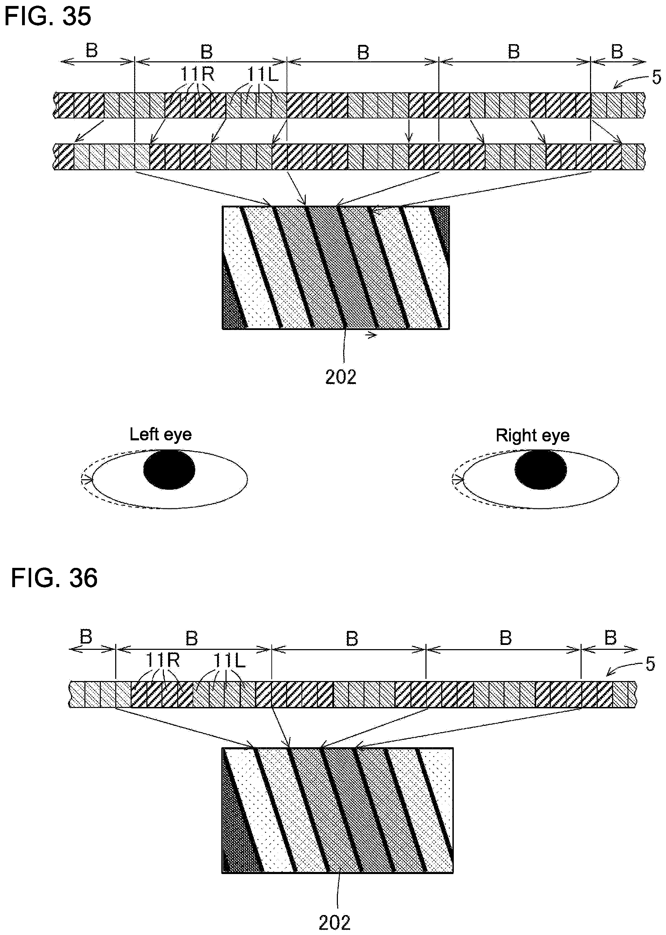

FIG. 34 is a diagram of a viewed screen 202 with the second light collection efficiency after the user moves the head by one subpixel to the right. With the second light collection efficiency (e.g., a light collection efficiency of 0%), when the user moves the head by one subpixel to the right, the controller 7 performs the first shift process as illustrated in FIG. 35. In the first shift process, the boundary lines of a central area of the display panel 5 serve as references, and parallax images located outside the boundary lines are displaced at the same time by one subpixel, and the boundary line 203 of the shift width B is also shifted by one subpixel to the right.

FIG. 36 is a diagram of a viewed screen with the second light collection efficiency after the user moves the head by the first distance to the right. With the second light collection efficiency (e.g., a light collection efficiency of 0%), the image pitch being k subpixels in the horizontal direction, and the viewing distance being the viewing distance $L_R$ with the first light collection efficiency (e.g., a light collection efficiency of 100%) and being equal to the OVD d with the first light collection efficiency, the controller 7 performs the second shift process. In the in second shift process, each time the head moves by 15.75 mm, the entire picture elements of a parallax image on the display panel 5 are shifted by one subpixel to the left with respect to the picture elements with the head being stationary to maintain a stereoscopic view although the entire picture elements have not been shifted by one subpixel from their positions before the movement of the head.

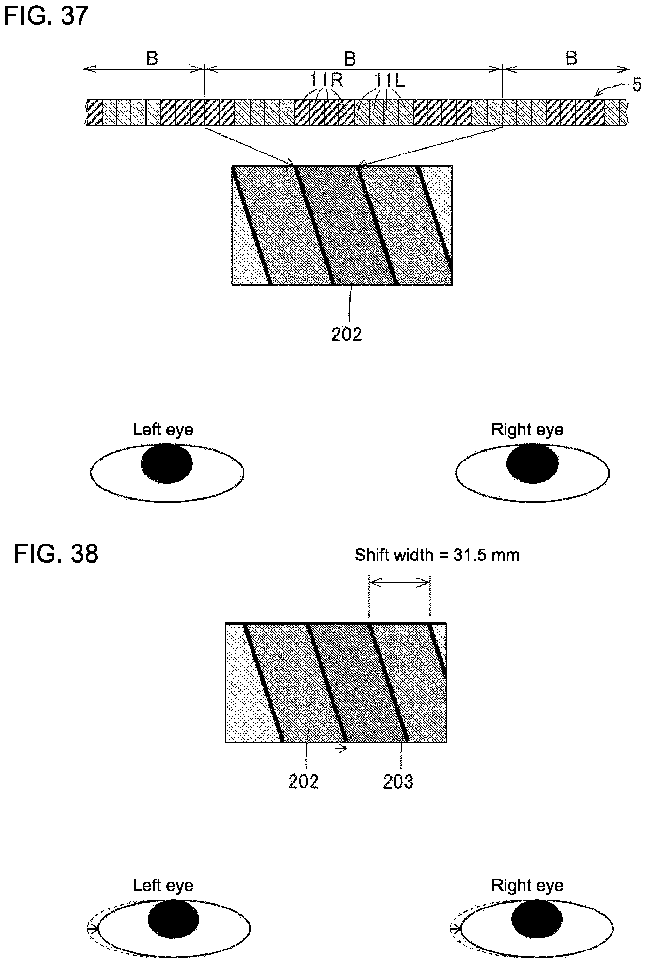

FIG. 37 is a diagram of a viewed screen 101 with the head of the user being stationary and with an incomplete third light collection efficiency (e.g., a light collection efficiency of 50%). With the head of the user being stationary, light being collected incompletely (e.g., a light collection efficiency of 50%), and the viewing distance $L_R$ being equal to the viewing distance with the first light collection efficiency (e.g., a light collection efficiency of 100%) that is equal to the OVD d with a light collection efficiency of 100%, the controller 7 performs the third shift process to allow a parallax image on the display panel 5 to have the shift width that is twice the first distance.

FIG. 38 is a diagram of a viewed screen 202 after the user moves the head to the right by a distance corresponding to a single subpixel. With the third light collection efficiency (e.g., a light collection efficiency of 50%), when the head moves by one subpixel to the right, the controller 7 at the same time performs the third shift process of shifting the boundary line 203 of the shift width B of a parallax image on the display panel 6 by one subpixel.

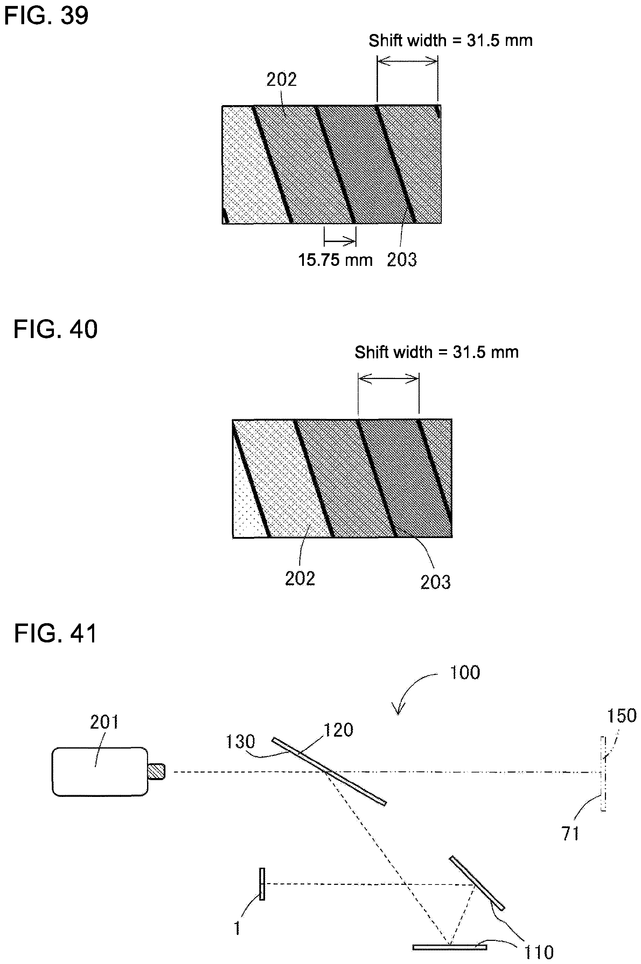

FIG. 39 is a viewed screen 202 with the head being moved by the first distance to the right and with the incomplete third light collection efficiency (e.g., a light collection efficiency of 50%). When the user moves the head by the first distance before the subpixels are shifted, with the image pitch in the horizontal direction using four subpixels and the viewing distance $L_R$ being equal to the OVD d with the first light collection efficiency (e.g., a light collection efficiency of 100%), the controller 7 performs the second shift process of shifting the entire picture elements of a parallax image on the display panel 5 by one subpixel each time the head moves by the first distance. A collective shift process is independent of each shift process being performed for each subpixel, and is performed at the same time (or consecutively). The shift process for each subpixel is to be performed each time the head moves by a unit distance, and is performed neither earlier nor later than the collective shift processes.

FIG. 40 is a diagram of a viewed screen with the third light collection efficiency when the user moves the head by the first distance to the right after collective subpixel shifting. With the third light collection efficiency, when the user shifts the head by the first distance, the controller 7 performs the third shift process of shifting a parallax image on the display panel 5 to the left by one subpixel collectively.

Specific Examples of Major Setting Values

Major setting values for the controller 7 can be calculated as below. The setting values are set in the controller 7.

The reference index number is the remainder of a dividend being the sum of a reference number and the initial index value divided by a divisor being the number of indexes. The reference numbers are serial numerical values for identifying subpixels. The reference number may be, for example, a subpixel number. The subpixel number is the reference number herein. The initial index value is a constant for adjusting the starting value of the reference number. The reference index number is a fixed value.

The reference shift amount is the quotient of the subpixel number divided by the shift cycle.

The index number in this case is calculated as the difference between the reference index and the reference shift amount. The index number defines whether a left parallax image or a right parallax image is displayed.

The index number shifts a subpixel per shift cycle when light is not collected completely or the light collection efficiency is less than or equal to 100%. The subpixel is shifted to a shift position that shifts in response to movement of the user. When the user moves, the shift amount is the quotient of a dividend being the difference of the subpixel number and an amount of the movement of the user divided by a divisor being the shift cycle. In other words, the shift amount is the difference between the dividend of the reference shift amount and the amount of the movement of the user.

The index number reflecting the movement of the shift position after movement of the user is the remainder of a dividend being the difference of the reference index number and the shift amount divided by a divisor being the number of indexes. When one direction in which the user moves is referred to as a positive direction, its opposite direction is referred to as a negative direction and is set to negative numerical values.

When light is collected with a light collection efficiency being greater than or equal to 0% and the user moves, the index number is to shift the index collectively for the entire image each time the amount of the movement of the user reaches the product of the shift cycle and the light collection efficiency. With light being collected, the shift position shifts in response to movement of the user. The shift amount corresponds to the quotient of the amount of movement divided by the product of the shift cycle and the light collection efficiency. The quotient is a second shift amount.

The index number reflecting collective shifting of the index after movement of the user is the remainder of a dividend being the difference of the reference index number and the shift amount minus the product of the shift cycle and the second shift amount divided by a divisor being the index number.

FIG. 41 is a schematic diagram of luminance measurement equipment for examining crosstalk reduction in the 3D display device 1. The HUD 100 including the 3D display device 1 may be mounted on a movable body, such as a vehicle, a vessel, or an aircraft. The HUD 100 may include components that also serve as other devices or components included in the movable body. For example, the movable body may use a windshield as the projection receiving member 120. The devices or components of the movable body serving as devices or components included in the HUD 100 may be referred to as HUD modules or 3D display components. The HUD 100 may be mounted on the movable body.

With index adjustment in the 3D display device 1 based on the image of the face of the user onto which the first reference image is projected, the movable body can perform adjustment without relying on the user's subjective determination. The movable body can thus allow the user to view a 3D image appropriately. In adjusting the index, the movable body uses no determination by the user. The movable body can thus repeat index adjustment multiple times without burdening the user and achieves more accurate index adjustment.

The present disclosure may be implemented in the following forms.

In one or more embodiments of the present disclosure, a three-dimensional display device includes a display panel, an optical element, a detector, and a controller. The display panel includes an active area including a plurality of subpixels arranged in a grid in a first direction and a second direction substantially orthogonal to the first direction. The active area displays a parallax image being a composite of a first image and a second image. The optical element includes a plurality of openings defining a traveling direction of light of the parallax image. The detector detects a position of a first eye and a position of a second eye of a user. The controller controls the display panel to display the composite of the first image and the second image based on the position of one eye of the first eye or the second eye detected by the detector with respect to a reference parallax image. The controller performs a first shift process of shifting the active area outward with respect to the position of the one eye detected by the detector to increase a shift amount by one subpixel in every first cycle set in the controller, a second shift process of shifting a boundary in the first shift process by one subpixel in response to one eye of the first eye or the second eye detected by the detector moving by one subpixel, and a third shift process of shifting subpixels in a second cycle by one subpixel and shifting the boundary by a number of subpixels in the first cycle. The subpixels in the second cycle are determined, with the first eye and the second eye of the user, as a product of the number of subpixels in the first cycle multiplied by a light collection efficiency.

In one or more embodiments of the present disclosure, a 3D display device can set the OVD with higher flexibility.

Although the embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

REFERENCE SIGNS

| | |
|---|---|
| 2 | detector |
| 3 | 3D display device |
| 4 | illuminator |
| 5 | display panel (display device) |
| 6 | parallax barrier (optical element) |
| 7 | controller |
| 8 | movable body |
| 9 | lenticular lens (optical element) |
| 10 | semi cylindrical lens |
| 11 | subpixel |
| 11L | first subpixel |
| 11R | second subpixel |
| 12 | pixel |
| 15 | display boundary |
| 51 | active area |
| 52 | left-eye viewable area |
| 53 | left-eye light-blocking area |
| 54 | minimum repeat |
| 61 | light-blocking portion |
| 62 | transmissive portion |
| 71 | display surface |
| 100 | head-up display |
| 110 | optical member |
| 120 | projection receiving member |
| 130 | projection screen |

**Claims**

1. A three-dimensional display device, comprising:

a display panel including an active area including a plurality of subpixels arranged in a grid in a first direction and a second direction substantially orthogonal to the first direction, the active area being configured to display a parallax image, the parallax image being a composite of a first image and a second image;
an optical element including a plurality of openings defining a traveling direction of light of the parallax image;
a detector configured to detect a position of a first eye and a position of a second eye of a user; and
a controller configured to control the display panel to display the composite of the first image and the second image based on the position of one eye of the first eye or the second eye detected by the detector with respect to a reference parallax image, the controller being configured to perform a first shift process of shifting the active area outward with respect to the position of the one eye detected by the detector to increase a shift amount by one subpixel in every first cycle set in the controller, a second shift process of shifting a boundary in the first shift process by one subpixel in response to one eye of the first eye or the second eye detected by the detector moving by one subpixel, and a third shift process of shifting subpixels in a second cycle by one subpixel and shifting the boundary by a number of subpixels in the first cycle, the subpixels in the second cycle being determined as a product of the number of subpixels in the first cycle multiplied by a light collection efficiency.

2. The three-dimensional display device according to claim 1, wherein
the light collection efficiency is a ratio of a number of subpixels emitting image light of one of the first image or the second image viewable through the openings to a number of subpixels emitting image light of the first image and the second image when the reference parallax image is viewed with one of the first eye or the second eye through the openings in the optical element from a position at a viewing distance away in a perpendicular direction to a display surface of the display panel.

3. The three-dimensional display device according to claim 1 or claim 2, wherein
the controller performs two of the first shift process, the second shift process, or the third shift process in response to the subpixels in the first cycle overlapping the subpixels in the second cycle.

4. The three-dimensional display device according to any one of claims 1 to 3, wherein
the subpixels shifted in the second shift process are shifted in a same direction as one of the second eye or the second eye moves.

5. The three-dimensional display device according to any one of claims 1 to 3, wherein
the subpixels shifted in the third shift process are shifted in a direction opposite to a direction in which one of the first eye or the second eye moves.

6. The three-dimensional display device according to claim 1, wherein

the active area in a space visually perceived by the user is a display surface, and
the boundary on the display surface being the active area extends in a direction inclined by an angle expressed with

$$\tan \theta = \frac{a \times Hp}{b \times Vp} \qquad \text{and } a \neq b,$$

where Hp is a dimension of each of the plurality of subpixels on the display surface in the first direction, Vp is a dimension of each of the plurality of subpixels on the display surface in the second direction, θ is an angle of the boundary on the display surface with respect to the second direction, and a and b are natural numbers.

FIG. 1

EP 4 287 618 A1

# FIG. 2

x-direction

y-direction

| | 11L |
| ▨ | 11R |

a = 2
b = 3
2n = 12
k = 4Hp

FIG. 3

## FIG. 4

x-direction ←

y-direction ↓

| 11L |
| 11R |

a = 2
b = 3
2n = 12
k = 4Hp

FIG. 5

FIG. 6

x-direction ←

y-direction

| | 11L |
| :--: | :--: |
| | 11R |

$a = 2$
$b = 3$
$2n = 10$
$k = \dfrac{10}{3}Hp$

## FIG. 7

x-direction

y-direction

| | 11L |
| | 11R |

$a = 2$
$b = 3$
$2n = 10$
$k = \dfrac{10}{3} Hp$

## FIG. 8

x-direction

y-direction

| | 11L |
|---|---|
| | 11R |

a = 5
b = 3
2n = 10
$k = \frac{10}{3}Hp$

FIG. 9

FIG. 10

# FIG. 11

12  11  53  52  51, 71  Hp

Vp

k

61  62

6

x-direction

y-direction

11L
11R

$r = 13$
$t = 9$
$k = \dfrac{26}{9} Hp$

# FIG. 12

x-direction

y-direction

11L
11R

$a = 1$
$b = 9$
$n = 26$
$k = \dfrac{26}{9} Hp$

**FIG. 13**

# FIG. 14

## FIG. 15

x-direction

y-direction

11L
11R

r = 18
t = 9
k = 4Hp

## FIG. 16

| | 53 | | | 52 | | 53 | | 51,71 / 11 | Hp |
|---|---|---|---|---|---|---|---|---|---|
| 1 | 28 | 19 | 10 | 1 | 28 | 19 | 10 | 1 | |
| 2 | 29 | 20 | 11 | 2 | 29 | 20 | 11 | 2 | |
| 3 | 30 | 21 | 12 | 3 | 30 | 21 | 12 | 3 | |
| 4 | 31 | 22 | 13 | 4 | 31 | 22 | 13 | 4 | |
| 5 | 32 | 23 | 14 | 5 | 32 | 23 | 14 | 5 | |
| 6 | 33 | 24 | 15 | 6 | 33 | 24 | 15 | 6 | |
| 7 | 34 | 25 | 16 | 7 | 34 | 25 | 16 | 7 | |
| 8 | 1 | 26 | 17 | 8 | 1 | 26 | 17 | 8 | |
| 9 | 2 | 27 | 18 | 9 | 2 | 27 | 18 | 9 | |
| 10 | 3 | 28 | 19 | 10 | 3 | 28 | 19 | 10 | |
| 11 | 4 | 29 | 20 | 11 | 4 | 29 | 20 | 11 | |
| 12 | 5 | 30 | 21 | 12 | 5 | 30 | 21 | 12 | |
| 13 | 6 | 31 | 22 | 13 | 6 | 31 | 22 | 13 | |
| 14 | 7 | 32 | 23 | 14 | 7 | 32 | 23 | 14 | |
| 15 | 8 | 33 | 24 | 15 | 8 | 33 | 24 | 15 | |
| 16 | 9 | 34 | 25 | 16 | 9 | 34 | 25 | 16 | |
| 17 | 10 | 1 | 26 | 17 | 10 | 1 | 26 | 17 | |
| 18 | 11 | 2 | 27 | 18 | 11 | 2 | 27 | 18 | |
| 19 | 12 | 3 | 28 | 19 | 12 | 3 | 28 | 19 | |
| 20 | 13 | 4 | 29 | 20 | 13 | 4 | 29 | 20 | |
| 21 | 14 | 5 | 30 | 21 | 14 | 5 | 30 | 21 | |
| 22 | 15 | 6 | 31 | 22 | 15 | 6 | 31 | 22 | |
| 23 | 16 | 7 | 32 | 23 | 16 | 7 | 32 | 23 | |
| 24 | 17 | 8 | 33 | 24 | 17 | 8 | 33 | 24 | |
| 25 | 18 | 9 | 34 | 25 | 18 | 9 | 34 | 25 | |
| 26 | 19 | 10 | 1 | 26 | 19 | 10 | 1 | 26 | |
| 27 | 20 | 11 | 2 | 27 | 20 | 11 | 2 | 27 | |
| 28 | 21 | 12 | 3 | 28 | 21 | 12 | 3 | 28 | |
| 29 | 22 | 13 | 4 | 29 | 22 | 13 | 4 | 29 | |
| 30 | 23 | 14 | 5 | 30 | 23 | 14 | 5 | 30 | |
| 31 | 24 | 15 | 6 | 31 | 24 | 15 | 6 | 31 | |
| 32 | 25 | 16 | 7 | 32 | 25 | 16 | 7 | 32 | |
| 33 | 26 | 17 | 8 | 33 | 26 | 17 | 8 | 33 | |
| 34 | 27 | 18 | 9 | 34 | 27 | 18 | 9 | 34 | |

Vp

k

x-direction

y-direction

☐ 11L

▨ 11R

$r = 17$

$t = 9$

$k = \dfrac{34}{9} Hp$

# FIG. 17

x-direction

y-direction

| | 11L |
| 11R |

r = 19
t = 9
$k = \frac{38}{9} Hp$

FIG. 18

FIG. 19

FIG. 20

EP 4 287 618 A1

FIG. 21

```
           ┌─────────────┐
           │    Start    │
           └─────────────┘
                  │
                  ▼
  ┌──────────────────────────────────────┐
  │   Determine optimum viewing distance  │───── S01
  └──────────────────────────────────────┘
                  │
                  ▼
  ┌──────────────────────────────────────┐
  │  Determine allowable range for image pitch │───── S02
  └──────────────────────────────────────┘
                  │
                  ▼
  ┌──────────────────────────────────────┐
  │  Determine first and second predetermined │
  │          numbers (r and t)            │───── S03
  └──────────────────────────────────────┘
                  │
                  ▼
  ┌──────────────────────────────────────┐
  │  Determine inclination and barrier pitch of │
  │          parallax barrier             │───── S04
  └──────────────────────────────────────┘
                  │
                  ▼
           ┌─────────────┐
           │     End     │
           └─────────────┘
```

FIG. 22

EP 4 287 618 A1

FIG. 23

FIG. 24

11
5
B
11
$L_R$
B
11L
B
11L 11R
11L
61 62
6
W

FIG. 25

EP 4 287 618 A1

FIG. 26

EP 4 287 618 A1

FIG. 27

EP 4 287 618 A1

FIG. 28

FIG. 29

B = infinite

203

202

Left eye

Right eye

203

FIG. 30

B = infinite

203

202

Left eye

Right eye

203

## FIG. 31

B = infinite

203

202

203

## FIG. 32

B   B   B   B   B

11R   11L

5

202

Left eye

Right eye

FIG. 33

FIG. 34

## FIG. 35

## FIG. 36

FIG. 37

FIG. 38

Shift width = 31.5 mm

202    203

## FIG. 39

Shift width = 31.5 mm

202

203

15.75 mm

## FIG. 40

Shift width = 31.5 mm

202

203

## FIG. 41

201

130

120

100

150

71

1

110

## INTERNATIONAL SEARCH REPORT

| International application No. |
|---|
| **PCT/JP2022/002965** |

| A. CLASSIFICATION OF SUBJECT MATTER |
|---|
| ***H04N 13/366***(2018.01)i; ***G02B 27/01***(2006.01)i; ***G02B 30/29***(2020.01)i; ***G02B 30/30***(2020.01)i; ***H04N 13/125***(2018.01)i; ***H04N 13/31***(2018.01)i; ***H04N 13/317***(2018.01)i<br>FI:  H04N13/366; G02B27/01; G02B30/29; G02B30/30; H04N13/125; H04N13/31; H04N13/317 |
| According to International Patent Classification (IPC) or to both national classification and IPC |

| B. FIELDS SEARCHED |
|---|
| Minimum documentation searched (classification system followed by classification symbols)<br>    H04N13/00; G02B27/01; G02B30/00; G03B35/00; G09G5/00 |
| Documentation searched other than minimum documentation to the extent that such documents are included in the fields searched<br>    Published examined utility model applications of Japan 1922-1996<br>    Published unexamined utility model applications of Japan 1971-2022<br>    Registered utility model specifications of Japan 1996-2022<br>    Published registered utility model applications of Japan 1994-2022 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | WO 2015/029433 A1 (MITSUBISHI ELECTRIC CORP.) 05 March 2015 (2015-03-05)<br>entire text, all drawings | 1-6 |
| A | US 2016/0373716 A1 (BOE TECHNOLOGY GROUP CO., LTD.) 22 December 2016 (2016-12-22)<br>entire text, all drawings | 1-6 |
| A | US 2014/0063001 A1 (SAMSUNG DISPLAY CO., LTD.) 06 March 2014 (2014-03-06)<br>entire text, all drawings | 1-6 |
| A | US 2018/0081183 A1 (BOE TECHNOLOGY GROUP CO., LTD.) 22 March 2018 (2018-03-22)<br>entire text, all drawings | 1-6 |
| A | JP 2019-82671 A (OSAKA CITY UNIVERSITY) 30 May 2019 (2019-05-30)<br>entire text, all drawings | 1-6 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 April 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| WO | 2015/029433 | A1 | 05 March 2015 | US | 2016/0198149 | A1 | |
| | | | | entire text, all drawings | | | |
| | | | | CN | 105531618 | A | |
| US | 2016/0373716 | A1 | 22 December 2016 | WO | 2016/127630 | A1 | |
| | | | | CN | 104597610 | A | |
| US | 2014/0063001 | A1 | 06 March 2014 | KR | 10-2014-0033560 | A | |
| | | | | CN | 103676346 | A | |
| US | 2018/0081183 | A1 | 22 March 2018 | WO | 2017/118047 | A1 | |
| | | | | CN | 106959519 | A | |
| JP | 2019-82671 | A | 30 May 2019 | US | 2019/0377177 | A1 | |
| | | | | entire text, all drawings | | | |
| | | | | WO | 2018/139611 | A1 | |
| | | | | EP | 3575854 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150363740